# EUROPEAN PATENT APPLICATION

(11) **EP 4 442 457 A1**
(43) Date of publication of application: **09.10.2024**
(21) Application number: 22900896.6
(22) Date of filing: 29.09.2022
(51) Int. Cl.: B32B 27/00, C09D 5/00, C09J 5/00, C09D 179/02, C09J 179/02, B32B 7/06

(54) **PRIMER COMPOSITION FOR SEPARATION AND LAMINATE**

(30) Priority: 30.11.2021 JP 2021194608; 14.09.2022 JP 2022146376
(71) Applicant: Sakata INX Corporation, Osaka-shi, Osaka 550-0002 (JP)
(72) Inventor: TOMIURA, Ibuki, Osaka-shi, Osaka 550-0002 (JP); TAKIMOTO, Kyohei, Osaka-shi, Osaka 550-0002 (JP); HARADA, Junichi, Osaka-shi, Osaka 550-0002 (JP)
(74) Representative: Grünecker Patent- und Rechtsanwälte PartG mbB
(86) International application number: PCT/JP2022/036474
(87) International publication number: WO 2023/100461

(57) **Abstract**

A releasing primer composition contains at least one type selected from (1) to (3) below, for forming the releasing primer layer which is used in a laminate by lamination layered in the order of a resin base material, the releasing primer layer, a printed layer, and a sealant layer: (1) a mixture containing a silane coupling agent containing glycidyl groups and a polyethyleneimine compound; (2) a mixture containing a silane coupling agent containing isocyanate groups and a polyethyleneimine compound; (3) a siloxane-modified polyethyleneimine compound. The releasing primer composition is intended to allow the base material and the printed layer to adhere together strongly and unfailingly during use, while more easily separating/releasing the printed layer from the resin base material and from sealant layer, as well as to achieve excellent laminatability and post-retort laminatability.

## Description

### Technical Field

The present invention relates to a releasing primer composition and a laminate.

### Background Art

Packaging materials using various types of plastic films are used for food, confectionary, articles of daily use, pet food, etc., from the viewpoints of designability, economy, content protection ability, transportability, etc. Also, many packaging materials are gravure-printed or flexographically printed with the intent of adding designs and messages that appeal to the consumer.

These packaging materials are obtained by "printing without post-processing" in which the surface of the base material film constituting the packaging material is simply printed on, or, if necessary, the printed face obtained by printing on the surface of the base material film constituting the packaging material is coated with an adhesive or anchor agent and then pre-lamination printed.

In the pre-lamination printing of the film, colored ink compositions and white ink composition are printed one by one on polyester, nylon, aluminum foil, or any of various other types of films, after which a polyethylene film, polypropylene film, etc., for heat-sealing purpose is layered on the printed layer of the white ink composition by means of dry lamination using an adhesive, extrusion lamination using an anchor coating agent, or the like (refer to Patent Literature 1).

Recent years have seen environmental contamination issues caused by packages made of plastic films, plastic bottles, and other plastic products that are dumped/thrown into the ocean as trash. These plastic products are broken down in sea water into submicron-size debris (microplastics) and float in sea water. If ingested by fish and other marine life, these plastics are condensed in their bodies. This raises a concern that the health of seabirds and humans that ingest this marine life as food may be negatively impacted.

To address these problems, a recycling method for releasing plastic base materials from laminates constituted by layered printing ink compositions is proposed as one of the various efforts to reduce microplastics. The proposed methods for releasing plastic base materials from laminates include releasing ink compositions (refer to Patent Literature 2, for example), releasing adhesives (refer to Patent Literature 3, for example), releasing anchor coating agents, etc. (refer to Patent Literatures 4 to 6, for example), and release solutions (refer to Patent Literature 7, for example).

However, these methods present a problem of insufficient post-retort laminatability when used with laminate printing ink compositions.

### Background Art Literature

### Patent Literature

Patent Literature 1: Japanese Patent Laid-open No. Hei 5-97959
Patent Literature 2: Japanese Patent No. 6631964
Patent Literature 3: Japanese Patent No. 6642688
Patent Literature 4: Japanese Patent No. 6388131
Patent Literature 5: Japanese Patent Laid-open No. 2020-175620
Patent Literature 6: International Patent Laid-open No. 2021/090690
Patent Literature 7: Japanese Patent No. 6690806

### Summary of the Invention

### Problems to Be Solved by the Invention

An object of the present invention is to allow a base material and a printed layer to adhere together strongly and unfailingly during use, while making it easier to separate/release the printed layer from the resin base material and from a sealant layer, as well as to achieve excellent laminatability and post-retort laminatability.

### Means for Solving the Problems

The inventors of the present invention found that the aforementioned object could be achieved by the releasing primer composition and laminate described below, and eventually completed the present invention as follows.
1. A releasing primer composition containing at least one type selected from (1) to (3) below, for forming a releasing primer layer which is used in a laminate by lamination layered in the order of a resin base material, the releasing primer layer, a printed layer, and a sealant layer.
   (1) A mixture containing a silane coupling agent containing glycidyl groups and a polyethyleneimine compound.
   (2) A mixture containing a silane coupling agent containing isocyanate groups and a polyethyleneimine compound.
   (3) A siloxane-modified polyethyleneimine compound.
2. The releasing primer composition according to 1, wherein the polyethyleneimine compound mentioned in (1) or (2) above has an amine value of 15.0 to 25.0 mmol/g and is also contained in a manner satisfying the condition described below, while the siloxane-modified polyethyleneimine compound mentioned in (3) above has an amine value of 5.0 to 15.0 mmol/g. Condition
   The ratio of the total number of glycidyl groups in the silane coupling agent and isocyanate groups in the silane coupling agent relative to the number of amino groups in the polyethyleneimine compounds ((number of glycidyl groups in the silane coupling agent + number of isocyanate groups in the silane coupling agent)/(total sum of the number of primary amino groups and number of secondary amino groups in the polyethyleneimine compounds)) is 0.20 to 2.50.
3. The releasing primer composition according to 1 or 2, wherein the number-averaged molecular weight of the polyethyleneimine compound, and that of the siloxane-modified polyethyleneimine compound, are each independently 1,000 to 200,000.
4. The releasing primer composition according to any one of 1 to 3, wherein the mass-averaged molecular weight of the polyethyleneimine compound, and that of the siloxane-modified polyethyleneimine compound, are each independently 4,000 to 800,000.
5. The releasing primer composition according to any one of 1 to 4, wherein the sealant layer is a layer formed by a cast propylene film or cast propylene film having a metal vapor deposition layer or formed by molten polyethylene.
6. A laminate comprising, on the resin base material, a releasing primer layer formed by the releasing primer composition according to any one of 1 to 5, as well as a printed layer formed on the releasing primer layer, and a sealant layer dry-laminated on the printed layer via an adhesive layer.
7. A laminate comprising, on the resin base material, a releasing primer layer formed by the releasing primer composition according to any one of 1 to 5, as well as a printed layer formed on the releasing primer layer, and a sealant layer extrusion-laminated on the printed layer via an anchor coating agent layer.

### Effects of the Invention

According to the present invention, the base material and printed layer can be adhered together strongly and unfailingly while the laminate is in use. After use, the printed layer can be easily separated/released from the resin base material using a releasing solution. Additionally, a releasing primer composition, and a laminate, can be obtained, each offering excellent laminatability and post-retort laminatability.

### Mode for Carrying Out the Invention

The present invention is an invention based on the items described below and can be used with various printing methods and laminates for various applications. It should be noted that, in the Specification pursuant to the present application for patent, the releasing primer composition proposed by the present invention is sometimes referred to simply as "primer composition."

The present invention is significant in that, as a releasing primer layer, one having a specific compositional makeup is adopted.

### [Releasing Primer Layer]

The releasing primer layer under the present invention is provided in such a way that it is positioned between a resin base material surface and a printed layer. Also, it is a releasing primer layer used, in conjunction with a laminate which is to be reutilized after use, for separating a resin film, etc., constituting the resin base material for the laminate and a printed layer formed thereon, thereby releasing the printed layer from the resin base material.

In addition, the releasing primer layer under the present invention is provided between a resin base material surface and a printed layer, and between the printed layer and a sealant layer. Also, it is a releasing primer layer used, in conjunction with a printed matter which is to be reutilized after use, for separating a resin base material and a printed layer formed thereon, while also separating a sealant layer and the printed layer, thereby releasing the printed layer from the base material and sealant layer.

The releasing primer layer proposed by the present invention differs in applications and required properties from, for example, an anchor coating agent used when an anchor coating layer is formed further on the printed face formed on the base material prior to laminating a resin film, etc., on top.

The releasing primer composition is a composition for forming a releasing primer layer on a resin base material in advance, before printing ink compositions are printed thereon.

Additionally, the releasing primer composition may also be used for forming a releasing primer layer in advance on a sealant layer, before a printed layer and the sealant layer are dry-laminated.

Additionally, the releasing primer composition may also be used for forming a releasing primer layer in advance between a printed layer and a sealant layer, before the printed layer and sealant layer are extrusion-laminated.

The releasing primer composition for forming a releasing primer layer provided in such a way that it is positioned between a resin base material and a printed layer, and the releasing primer composition for forming a releasing primer layer provided in such a way that it is positioned between a printed layer and a sealant layer, may be the same or different.

The releasing primer composition contains at least one type selected from (1) to (3) below.
(1) A mixture containing a silane coupling agent containing glycidyl groups and a polyethyleneimine compound.
(2) A mixture containing a silane coupling agent containing isocyanate groups and a polyethyleneimine compound.
(3) A siloxane-modified polyethyleneimine compound.

It should be noted that the polyethyleneimine compound in either of the mixtures in (1) and (2) does not include the siloxane-modified polyethyleneimine compound in (3). Also, when the mixtures in (1) and (2) are both contained, consequently a silane coupling agent containing glycidyl groups, a silane coupling agent containing isocyanate groups, and a polyethyleneimine compound, are contained.

The coating amount of the releasing primer composition on the resin base material is preferably 0.010 g/m² or higher, or more preferably 0.015 g/m² or higher, in terms of solids content. Also, it is preferably 0.400 g/m² or lower, or more preferably 0.300 g/m² or lower, or yet more preferably 0.200 g/m² or lower, or most preferably 0.100 g/m² or lower.

It should be noted that the releasing primer composition may or may not contain polyolefin resin particles, inorganic metal salts, and organic metal salts.

### <Polyethyleneimine Compound>

For any polyethyleneimine compound in (1) or (2) above that may be contained in the primer composition under the present invention, the amine value of the polyethyleneimine compound is preferably 15.0 to 25.0 mmol/g; in particular, it is more preferably 16.0 mmol/g or higher, or yet more preferably 17.0 mmol/g or higher, and more preferably 20.0 mmol/g or lower, or yet more preferably 19.0 mmol/g or lower.

Also, in terms of the amino groups in the molecule, a polyethyleneimine compound that has all groups of respective types from primary amino groups to tertiary amino groups is preferred; in particular, preferably the content percentages based on the numbers of amino groups of respective types are such that more secondary amino groups are contained than primary and tertiary amino groups, and more preferably the content of the secondary amino groups in all amino groups from primary to tertiary is 40% or higher based on number of groups. When more of these ranges are met, release can be performed more easily.

### <Silane Coupling Agent Containing Glycidyl Groups, and Silane Coupling Agent Containing Isocyanate Groups>

Examples of the silane coupling agent containing glycidyl groups in (1) above that may be contained in the primer composition under the present invention include 3-glycidyloxypropyl trimethoxysilane, 3-glycidyloxypropyl methoxydimethoxysilane, 3-glycidyloxypropyl methoxydiethoxysilane, 3-glycidyloxypropyl triethoxysilane, and the like. Similarly, examples of the silane coupling agent containing isocyanate groups in (2) above include triethoxy(3-isocyanatopropyl)silane, and the like.

From the viewpoint of post-retort laminatability, the silane coupling agent containing glycidyl groups and silane coupling agent containing isocyanate groups may be compounded in such a way that the ratio of the (number of glycidyl groups in the silane coupling agent containing glycidyl groups + number of isocyanate groups in the silane coupling agent containing isocyanate groups) relative to the number of amino groups in the polyethyleneimine compounds, i.e., ((number of glycidyl groups in the silane coupling agent containing glycidyl groups + number of isocyanate groups in the silane coupling agent containing isocyanate groups) / total sum of the number of primary amino groups and number of secondary amino groups in the polyethyleneimine compounds), becomes 0.20 to 2.50. Of these ratios, 0.30 or higher is preferred, and 0.50 or higher is more preferred, while 2.20 or lower is preferred, and 1.90 or lower is more preferred.

It should be noted that the number of amino groups in the polyethyleneimine compounds represents the total sum of the numbers of primary amino groups and secondary amino groups, respectively, while the ratio of the (number of glycidyl groups + number of isocyanate groups) relative to the number of amino groups in the polyethyleneimine compounds represents the ratio of the numbers of these groups.

This value of (number of glycidyl groups in the silane coupling agent containing glycidyl groups + number of isocyanate groups in the silane coupling agent containing isocyanate groups) / value of amino groups in the polyethyleneimine compounds can be obtained by the concept formula below: [(Coating amount of the glycidyl group-containing silane coupling agent (g/m2) × Average number of glycidyl groups in one molecule / Average molecular weight of the glycidyl group-containing silane coupling agent (g/mmol)) + (Coating amount of the isocyanate group-containing silane coupling agent (g/m2) × Average number of isocyanate groups in one molecule / Average molecular weight of the isocyanate group-containing silane coupling agent (g/mmol))] divided by [Coating amount of the polyethyleneimine compounds (g/m2) × Amine value (mmol/g) × (Average (number of primary amino groups + number of secondary amino groups) in one molecule) / (Average (number of primary amino groups + number of secondary amino groups + number of tertiary amino groups) in one molecule)].

### <Siloxane-modified Polyethyleneimine Compound>

For one in (3) above that may be present in the releasing primer composition proposed by the present invention, any polyethyleneimine compound modified by silane coupling agent can be used, which is obtained by reacting a polyethyleneimine and at least one type of silane coupling agent being an amine-reactive hydrolysable organosilane expressed by the formula: R-Z-SiY₃ [in the formula, R represents an amine-reactive group selected from the group that consists of isocyanate group, oxiranyl group, glycidoxy group, acryloxy group, carboethoxy group, carbomethoxy group, vinyl sulfonyl group, and acrylamide group, Z represents a divalent organic group containing carbon atoms, and Y's each independently represent a hydrolysable group]. For the siloxane-modified polyethyleneimine compound, one with an amine value of 5.0 to 15.0 mmol/g is preferred.

This siloxane-modified polyethyleneimine compound has a structure in which the silane coupling agent has bonded to the polyethyleneimine as a result of the group R in the silane coupling agent reacting with the amino groups in the polyethyleneimine. As mentioned above, however, preferably the siloxane-modified polyethyleneimine compound has a specified amine value.

### <Polyethyleneimine Compound, Siloxane-modified Polyethyleneimine Compound>

For the polyethyleneimine compound in (1) or (2) above and siloxane-modified polyethyleneimine compound in (3) above that may be contained in the primer composition under the present invention, those that each independently have a number-averaged molecular weight of 1,000 to 200,000 are preferred from the viewpoint of laminatability. Also, those that each independently have a mass-averaged molecular weight of 4,000 to 800,000 are preferred.

### <Method for Manufacturing Releasing Primer Composition>

The releasing primer composition can be obtained by adding a solvent to a polyethyleneimine compound and agitating the mixture, and then further adding a silane coupling agent containing glycidyl groups and agitating the mixture, as in (1) above.

As in (2) above, it can be obtained by adding a solvent to a polyethyleneimine compound and agitating the mixture, and then further adding a silane coupling agent containing isocyanate groups and agitating the mixture. It should be noted that the releasing primer composition can also be obtained by adding a solvent to a polyethyleneimine compound and agitating the mixture, and then further adding a silane coupling agent containing glycidyl groups and silane coupling agent containing isocyanate groups, and agitating the mixture.

As in (3) above, it can be obtained by adding a solvent to a siloxane-modified polyethyleneimine and agitating the mixture. For the solvent, a mixture obtained by adding one or more types of alcohols such as methanol, ethanol, and isopropyl alcohol, to water, can be utilized.

### [Resin Base Material]

For the resin base material under the present invention, any base materials made of known resins used for laminate can be adopted. For the resins representing resin base materials to be used for retort applications, films of polyethylene terephthalate (PET) and other polyesters, nylons, and other polyamide resins, transparent vapor deposition polyesters, transparent vapor deposition nylons, etc., can be adopted. Also, for the base materials to be used for boiling applications, polyethylene (PE), polypropylene (PP), and other polyolefin films can be used in addition to the foregoing films.

### [Types of Printing]

The releasing primer layer under the present invention is formed in such a way that it is positioned between a resin base material surface and a printed layer formed by a printing ink composition for laminate (hereinafter also referred to as "printed layer" depending on the situation). Thereafter, a laminate can be obtained by a lamination method wherein a sealant layer is dry-laminated using an adhesive, or by a lamination method wherein a sealant layer is extrusion-laminated using an anchor coating agent.

In addition, when providing the resin base material, releasing primer layer, printed layer, and sealant layer, any known layer may also be formed between any of these layers or on the surface of the printed matter. Preferably a releasing primer layer is also provided between the resin base material and printed layer, and also between the printed layer and sealant layer.

Printing for laminate, in which the releasing primer layer under the present invention is used, is explained below.

### <Printing Ink Composition for Laminate>

The printing ink composition for laminate contains a pigment, a binder resin, various types of additives, and solvents.

### (Pigment)

For the pigment used in the ink composition for laminate, one or more types of known inorganic and organic pigments conventionally used in ink compositions for laminate can be used.

The inorganic pigments include, for example, titanium oxide, red iron oxide, antimony red, cadmium yellow, cobalt blue, Prussian blue, ultramarine blue, carbon black, graphite, and other colored pigments, as well as extender pigments such as silica particles, calcium carbonate, kaolin, clay, barium sulfate, aluminum hydroxide, talc, and the like. Of these, preferably titanium oxide is used as a white pigment.

The organic pigments include, for example, oil-soluble azo pigments, insoluble azo pigments, azo lake pigments, condensed azo pigments, copper phthalocyanine pigments, condensed polycyclic pigments, and the like.

The content of these pigments in the printing ink composition is normally around 1 to 50% by mass.

### (Binder Resin)

For the binder resin, a polyurethane resin, or preferably from the viewpoints of stability, adhesion property, and laminatability of the printing ink composition for laminate, a polyurethane resin having an amine value, is contained.

### (Polyurethane Resin)

For the polyurethane resin, a polyurethane resin not modified by acid and/or polyurethane resin modified by acid may be contained. A polyurethane resin not modified by acid is a polyurethane resin having no carboxylic acid groups, sulfonic acid groups, phosphoric acid groups, or other acid groups at the ends of the molecule and/or other locations in the molecule. A polyurethane resin modified by acid is a polyurethane resin having carboxylic acid groups, sulfonic acid groups, phosphoric acid groups, or other acid groups at the ends of the molecule and/or other locations in the molecule.

Whether the printed layer is formed by an ink composition using a polyurethane resin modified by acid as a vehicle, or it is formed by an ink composition using as a vehicle a polyurethane resin not modified by acid, or other resin that inherently makes releasing difficult, the printed layer can be smoothly released from the resin base material.

### For such polyurethane resins, any polyurethane resins generally used in printing ink compositions can be used.

In particular, polyurethane resins having amino groups (having an amine value) are preferred from the viewpoints of stability over time, adhesion property, and laminatability of the printing ink composition. Of the polyurethane resins having amino groups, those having one or more types selected from primary amino groups, secondary amino groups, and tertiary amino groups at the ends of the molecule, or particularly those having one or more types selected from primary amino groups and secondary amino groups at the ends of the molecule, are more preferred.

Yet more preferred are polyurethane resins having hydroxyl groups and also having one or more types selected from primary amino groups, secondary amino groups, and tertiary amino groups at the ends of the molecule.

When its polyurethane resin has specific functional groups such as the amino groups, the printing ink composition for laminate will have excellent printability and adhesion property.

The amine value of the polyurethane resin is preferably 1.0 to 15.0 mgKOH/g, or more preferably 2.0 to 8.0 mgKOH/g. If the amine value is under 1.0 mgKOH/g, adhesion property of the printing ink composition for film under the present invention, with respect to films, can drop, with laminatability also becoming lower; whereas, if the amine value exceeds 15.0 mgKOH/g, anti-blocking property can drop.

Also, preferably the polyurethane resin has hydroxyl groups in the molecule and at the ends of the molecule from the viewpoint of resolubility.

It should be noted that, under the present invention, the amine value refers to the amine value per 1 gram of solids content, representing a value measured by the potentiometric titration method (such as COMTITE (AUTO TITRATOR COM-900, BURET B-900, TITSTATION K-900), Hiranuma Sangyo Co., Ltd.) using a 0.1N aqueous hydrochloric acid solution and then converting the result to a potassium hydroxide equivalent.

### (Polyurethane Resin Not Modified by Acid)

For the polyurethane resin not modified by acid, a polyurethane polyurea resin, and/or polyurethane polyurea resin obtained using a compound resulting from ketiminating the amino groups in a polyamine compound with a ketone compound, is/are preferred.

A polyurethane polyurea resin is based on a urethane prepolymer obtained from an organic diisocyanate component and a high-molecular diol component, which is turned into a polyurethane polyurea resin by extending the chain and/or end-stopping.

And, a polyurethane polyurea resin obtained using a ketiminated compound represents, in terms of the chain extender and/or reaction terminator, (a) a polyurethane polyurea resin obtained by reacting with a urethane prepolymer a compound resulting from ketiminating the amino groups in a polyamine compound in an organic solvent using a ketone compound, or (b) a polyurethane polyurea resin obtained by adding to and mixing under agitation with a urethane prepolymer a compound resulting from ketiminating the amino groups in a polyamine compound in an organic solvent using a ketone compound, followed by addition of water and subsequent chain extension and reaction termination, where using the a and/or b allows the obtained back printing ink composition to have less amine odor and demonstrate excellent stability over time.

Regarding the polyurethane polyurea resin, a biomass polyurethane polyurea resin may be contained in consideration of environmental aspects.

### (Polyurethane Polyurea Resin Not Modified by Acid)

The polyurethane polyurea resin not modified by acid has one or more types selected from primary amino groups and secondary amino groups at the ends of the molecule.

More preferred is a polyurethane polyurea resin not modified by acid that has hydroxyl groups and also has one or more types selected from primary amino groups and secondary amino groups at the ends of the molecule.

For such polyurethane polyurea resins, any polyurethane resin obtained by reacting an organic diisocyanate compound and a high-molecular diol compound to synthesize a urethane prepolymer, to which the chain extender and reaction terminator below are reacted, can be used favorably.

### (Synthesis of Urethane Prepolymer)

The aforementioned urethane prepolymers are each obtained by reacting an organic diisocyanate compound and a high-molecular diol compound as described below.

### (Organic Diisocyanate Compound)

The organic diisocyanate compound may be, for example, tolylene diisocyanate or other aromatic diisocyanate compound, 1,4-cyclohexanediisocyanate, isophorone diisocyanate, dicyclohexylmethane-4,4-diisocyanate (hydrogenated MDI), or other alicyclic diisocyanate compound, hexamethylene diisocyanate or other aliphatic diisocyanate compound, or α,α,α',α'-tetramethylxylylene diisocyanate or other aromatic aliphatic diisocyanate compound. Any one type selected from these organic diisocyanate compounds can be used alone, or two or more types can be mixed. In particular, alicyclic diisocyanate compounds, aliphatic diisocyanate compounds, and aromatic aliphatic diisocyanate compounds are more preferred.

Also, other organic diisocyanate compounds, such as 1,3- and/or 1,4-phenylene diisocyanate, 4,4-diisocyanato biphenyl, 3,3-dimethyl-4,4-diisocyanato biphenyl, and other aromatic diisocyanate compounds, cyclohexylene diisocyanate, methylcyclohexylene diisocyanate (hydrogenated TDI), and other alicyclic diisocyanate compounds, ethylene diisocyanate, tetramethylene diisocyanate, dodecamethylene diisocyanate, 2,2,4-trimethylhexamethylene diisocyanate, and other aliphatic diisocyanate compounds, and m- and/or p-xylylene diisocyanate (XDI) and other aromatic aliphatic diisocyanate compounds, can also be utilized.

If other organic diisocyanate compounds are also used, they can be used in such a way that the number of isocyanate groups in the other organic diisocyanate compounds becomes 50% or less relative to the total number of isocyanate groups in all organic diisocyanate compounds, where the percentage is preferably 30% or lower, or more preferably 10% or lower.

Alternately, the other organic diisocyanate compounds account for 50 parts by mass or less, or preferably 30 parts by mass or less, or more preferably 10 parts by mass or less, in all organic diisocyanate compounds representing 100 parts by mass.

### (High-molecular Diol Compound)

The high-molecular diol compound may be, for example, polyethylene glycol, polypropylene glycol, or other polyalkylene glycol, ethylene oxide-, propylene oxide-, or other alkylene oxide-adduct of bisphenol A, or other polyether diol compound, polyester diol obtained by condensation-reacting one, two, or more types of dibasic acids such as adipic acid, sebacic acid, phthalic anhydride, etc., and one, two, or more types of glycols such as ethylene glycol, propylene glycol, 1,4-butanediol, neopentyl glycol, 3-methyl-1,5-pentanediol, etc., polycaprolactone diol or other polyester diol compound, or the like. Any one type selected from these high-molecular diol compounds can be used alone, or two or more types can be mixed.

Additionally, any one type, or mixture of two or more types, of low-molecular diol compounds such as 1,4-pentanediol, 2,5-hexanediol, 3-methyl-1,5-pentanediol, and other alkanediols, ethylene glycol, propylene glycol, 1,4-butanediol, 1,3-butanediol, and the like, can be used in addition to the high-molecular diol compound.

Also, for the high-molecular diol compound, one with a number-averaged molecular weight of 1,000 to 8,000 is preferred, one with a number-averaged molecular weight of 1,000 to 5,500 is more preferred, or one with a number-averaged molecular weight of 1,000 to 4,000 is yet more preferred.

Also, for the high-molecular diol compound, one containing 3-methyl-1,5-pentylene adipate diol can be selected.

In this case, the following may also be combined as other high-molecular diol compounds.

The high-molecular diol compounds other than 3-methyl-1,5-pentylene adipate diol include polyester diols obtained by condensation-reacting one, two, or more types of dibasic acids such as adipic acid, sebacic acid, phthalic anhydride, etc., and one, two, or more types of glycols such as ethylene glycol, propylene glycol, 1,4-butanediol, neopentyl glycol, 3-methyl-1,5-pentanediol, etc., polycaprolactone diols, and other polyester diol compounds, as well as polyethylene glycol, polypropylene glycol, and other polyalkylene glycols, ethylene oxide-, propylene oxide-, and other alkylene oxide-adducts of bisphenol A and other polyether diol compounds, and the like. Any one of these high-molecular diol compounds can be used alone, or two or more types can be mixed.

Of the above, 3-methyl-1,5-pentylene adipate diol obtained by condensation-reacting adipic acid and 3-methyl-1,5-pentanediol, having a number-averaged molecular weight of 1,000 to 8,000, is preferred, while 3-methyl-1,5-pentylene adipate diol having a number-averaged molecular weight of 1,000 to 4,000 is more preferred.

If other high-molecular diol compounds are also used, they can be used in such a way that the number of hydroxyl groups in the other high-molecular diol compounds becomes 70% or less relative to the total number of hydroxyl groups in all high-molecular diol compounds, where the percentage is preferably 55% or lower, or more preferably 40% or lower.

Alternately, the other high-molecular diol compounds account for 50 parts by mass or less, or preferably 35 parts by mass or less, or more preferably 20 parts by mass or less, in all high-molecular diol compounds representing 100 parts by mass.

It should be noted that, if the organic solvent used in the printing ink composition for laminate is a mixed solvent system (hereinafter also referred to as "mixed solution") consisting of an ester-based solvent and an alcohol-based solvent as described below, use of a polyether diol compound, or preferably polypropylene glycol, as a high-molecular diol compound tends to increase the solubility of the obtained polyurethane resin, while it also tends to achieve good printability in terms of tone reproducibility, antifogging property, etc., thereby allowing a wide range of printing ink compositions to be designed according to the required performance, which is desirable.

### (Biomass Polyurethane Polyurea Resin Not Modified by Acid)

As the polyurethane resin, any biomass polyurethane polyurea resin not modified by acid may be contained in consideration of environmental aspects. Biomass polyurethane polyurea resins not modified by acid are explained below. It should be noted that, of the explanations of biomass polyurethane polyurea resins not modified by acid, those explanations common to the polyurethane polyurea resins not modified by acid and already mentioned above are omitted as deemed appropriate.

A biomass polyurethane polyurea resin not modified by acid is a polyurethane resin containing biomass-derived (plant-derived) components. Biomass polyurethane resins not modified by acid can help prevent global warming and reduce environmental burdens compared to when other exhaustible resources are used. Also, preferably the biomass polyurethane polyurea resin not modified by acid is one obtained by synthesizing a biomass urethane prepolymer by reacting a bio-polyester polyol compound and an organic diisocyanate compound and then, if necessary, reacting a chain extender/reaction terminator thereto, where more preferably the isocyanate compound is a plant-derived bio-isocyanate.

### (Isocyanate Compound)

Any plant oil-derived diisocyanate, other than the organic diisocyanates explained in connection with the polyurethane polyurea resins not modified by acid, can be used. A plant oil-derived organic diisocyanate compound is obtained by converting a plant-derived dicarboxylic acid into terminal amino groups through acid amidation and reduction, and by further converting the amino groups into isocyanate groups by reacting them with a phosgene. The plant-derived bio-polyisocyanate may be dimer acid diisocyanate (DDI), octamethylene diisocyanate, decamethylene diisocyanate, or the like. In addition, a plant-derived isocyanate compound can also be obtained by starting from a plant-derived amino acid as a raw material and converting its amino groups into isocyanate groups. For example, lysine diisocyanate (LDI) is obtained by methyl-esterifying the carboxyl groups in lysine and then converting the amino groups into isocyanate groups. Also, 1,5-pentamethylene diisocyanate is obtained by decarboxylating the carboxyl groups in lysine and then converting the amino groups into isocyanate groups.

### (Bio-polyester Polyol Compound)

The bio-polyester polyol compound (biomass polyester polyol) is explained below.

In consideration of environmental aspects, a bio-polyester polyol compound obtained by synthesizing materials including plant-derived components, among other bio-polyester polyol compounds, may also be combined as one of the aforementioned other high-molecular diol compounds.

Also, a polyurethane polyurea resin not modified by acid, obtained by reacting a polyester polyol compound containing a bio-polyester polyol compound with any of the aforementioned specific isocyanate compounds, can be mixed into the polyurethane polyurea resin not modified by acid under the present invention.

Accordingly, a bio-polyester polyol obtained by reacting a short-chain diol compound with 2 to 4 carbon atoms and a carboxylic acid compound can be adopted as the bio-polyester polyol compound. As for the bio-polyol component, preferably at least one of the short-chain diol compound and carboxylic acid compound is plant-derived, or more preferably both are plant-derived.

The plant-derived short-chain diol compound with 2 to 4 carbon atoms is not specifically limited. For example, the short-chain diol compound may be 1,3-propanediol, 1,4-butanediol, ethylene glycol, etc., obtained from plant materials according to the methods below. Two or more of these may be combined.

1,3-propanediol can be manufactured from a glycerol by way of 3-hydroxypropylaldehyde (HPA) according to the fermentation method wherein a plant resource (such as corn, etc.) is broken down to obtain glucose. A 1,3-propanediol component manufactured by a bio method such as the fermentation method presents superior safety, provides lactic acid and other useful byproducts, and can also keep the manufacturing cost low, compared to a 1,3-propanediol component obtained by the EO manufacturing method. 1,4-butanediol can be manufactured by manufacturing a glycol from a plant resource and fermenting it to obtain a succinic acid, and then hydrogenating the succinic acid. Also, ethylene glycol can be manufactured by way of ethylene from a bioethanol obtained by a conventional method.

The plant-derived carboxylic acid compound is not specifically limited. For example, the carboxylic acid compound may be sebacic acid, succinic acid, lactic acid, glutaric acid, dimer acid, etc. Two or more of these may be used together. Of these, preferably at least one type selected from the group that consists of sebacic acid, succinic acid, and dimer acid is contained in the carboxylic acid compound. Also, 0.05 to 0.5 parts by mass of malic acid may be contained relative to 100 parts by mass of sebacic acid.

The bio-polyester polyol compound is produced as a 100% plant-derived bio-polyester polyol by condensation-reacting a plant-derived short-chain diol compound and a plant-derived carboxylic acid as deemed appropriate. To be specific, polytrimethylene sebacate polyol is obtained by directly dehydration-condensing plant-derived sebacic acid and plant-derived 1,3-propanediol. Also, polybutylene succinate polyol is obtained by directly dehydration-condensing plant-derived succinic acid and plant-derived 1,4-butanediol.

One or more types of these bio-polyester polyol compounds may be used. Urethane prepolymers obtained using these plant-derived components may be contained by 10% by mass or more, or 40% by mass or more, in terms of solids content, in all urethane prepolymers.

### (Chain Extender and Reaction Terminator)

Next, the chain extender and reaction terminator used with the polyurethane polyurea resin not modified by acid and biomass polyurethane polyurea resin not modified by acid are explained.

For the chain extender, any known chain extenders utilized in polyurethane polyurea resins that function as binders for printing ink compositions can be utilized, such as polyamine compounds including ethylenediamine, propylenediamine, tetramethylenediamine, hexamethylenediamine, and other aliphatic diamines, isophoronediamine, 4,4'-dicyclohexylmethanediamine, and other alicyclic diamines, tolylenediamine and other aromatic diamines, xylenediamine and other aromatic aliphatic diamines, N-(2-hydroxyethyl)ethylenediamine (aminoethylethanolamine), N-(2-hydroxyethyl)propylenediamine, N,N'-di(2-hydroxyethyl)ethylenediamine and other diamines having hydroxyl groups, as well as ethylene glycol, propylene glycol, 1,4-butanediol, neopentyl glycol, diethylene glycol, triethylene glycol, and other diol compounds, for example.

Additionally, diethylenetriamine, triethylenetetramine and other polyamine compounds can be combined to the extent that the polyurethane polyurea resin will not gelate.

Examples of the reaction terminator for introducing primary amino groups and secondary amino groups to the ends of the polyurethane polyurea resin include polyamine compounds such as ethylenediamine, propylenediamine, tetramethylenediamine, hexamethylenediamine, and other aliphatic diamines, isophoronediamine, 4,4'-dicyclohexylmethanediamine and other alicyclic diamines, diethylenetriamine, triethylenetetratriamine, and other polyamines, tolylenediamine and other aromatic diamines, xylenediamine and other aromatic aliphatic diamines, N-(2-hydroxyethyl)ethylenediamine (aminoethylethanolamine), N-(2-hydroxyethyl)propylenediamine, and other diamines having hydroxyl groups, and the like. Of these, diethylenetriamine, triethylenetetratriamine, and other polyamines having primary amino groups are preferred.

Examples of the reaction terminator for introducing hydroxyl groups to the polyurethane polyurea resin include monoethanolamine, diethanolamine, and other alkanolamines, N-(2-hydroxyethyl)ethylenediamine, N-(2-hydroxyethyl)propylenediamine, and other diamines having hydroxyl groups. Also, monoamine compounds and monoalcohol compounds, which are known reaction terminators, can be utilized, where specific examples include n-propylamine, n-butylamine, and other monoalkylamines, di-n-butylamine and other dialkylamines, ethanol and other monoalcohols.

Regarding the method for manufacturing the polyurethane polyurea resin not modified by acid and biomass polyurethane polyurea resin not modified by acid, any known method for manufacturing a polyurethane resin using the aforementioned materials can be used directly. Also, since the hardness of the obtained polyurethane resin will differ when the mass-averaged molecular weight, chemical structure and equivalent ratio of each component are different, the printability and laminatability can be adjusted by combining these components as deemed appropriate. The mass-averaged molecular weight of the polyurethane polyurea resin not modified by acid and biomass polyurethane polyurea resin not modified by acid is preferably 10,000 to 70,000, or more preferably 20,000 to 60,000.

Additionally, to achieve appropriate flexibility and higher lamination strength, a polyurethane resin which has no urea bonds and whose mass-averaged molecular weight is 1,000 to 70,000 can be compounded as the polyurethane resin.

### (Reaction of Organic Diisocyanate Compound and High-molecular Diol Compound)

Also, when reacting the organic diisocyanate compound and high-molecular diol compound, the use ratio of the two, or equivalent ratio of isocyanate groups : hydroxyl groups (isocyanate index), is in a range of normally 1.2:1.0 to 3.0:1.0, or preferably 1.3:1.0 to 2.0:1.0. If the isocyanate index is lower than 1.2, the polyurethane polyurea resin not modified by acid and biomass polyurethane polyurea resin not modified by acid tend to become flexible, potentially leading to low anti-blocking property, etc., when the printing ink composition is printed, in which case other hard resins may have to be combined.

A catalyst can be used when reacting the organic diisocyanate compound and high-molecular diol compound to obtain the polyurethane polyurea resin not modified by acid and biomass polyurethane polyurea resin not modified by acid used under the present invention.

In particular, use of organic metal-based compounds is preferred, where such organic metal-based compounds include dibutyl titanium dichloride, tetrabutyl titanate, butoxy titanium trichloride, and other titanium compounds, dibutyl tin sulfide, tributyl tin sulfide, tributyl tin oxide, dibutyl tin dichloride, dibutyl tin oxide, dibutyl tin dibromide, dibutyl tin dimaleate, dibutyl tin dilaurate, dibutyl tin diacetate, dioctyl tin dilaurate, tributyl tin acetate, tributyl tin chloride, triethyl tin ethoxide, tributyl tin ethoxide, dioctyl tin oxide, tributyl tin trichloroacetate, tin 2-ethylhexanoate, and other tin compounds, lead oleate, lead 2-ethylhexanoate, lead benzoate, lead naphthenate, and other lead compounds, as well as iron 2-ethylhexanoate, iron acetylacetonate, cobalt benzoate, cobalt 2-ethylhexanoate, zinc naphthenate, zinc 2-ethylhexanoate, zirconium naphthenate, and the like. Of these, tetrabutyl titanate and other titanium compounds are preferred.

Tertiary amine compounds can also be used; for example, triethylamine, triethylenediamine, 1,4-diazabicyclo(2,2,2)octane, and 1,8-diazabicyclo(5,4,0)-undecene-7 (DBU) can be used.

(Polyurethane Polyurea Resin Not Modified by Acid Obtained Using Compound Resulting from Ketiminating Amino Groups in Polyamine Compound with Ketone Compound, and Biomass Polyurethane Polyurea Resin Not Modified by Acid Obtained Using Compound Resulting from Ketiminating Amino Groups in Polyamine Compound with Ketone Compound)

The polyurethane polyurea resin not modified by acid obtained using a compound resulting from ketiminating the amino groups in a polyamine compound with a ketone compound, and biomass polyurethane polyurea resin not modified by acid obtained using a compound resulting from ketiminating the amino groups in a polyamine compound with a ketone compound, are each obtained using, of the aforementioned chain extenders and/or reaction terminators, a ketimine compound resulting from ketiminating a polyamine compound beforehand with an excess amount of ketone compound, by means of (c) adopting a compound resulting from ketiminating the amino groups in a polyamine compound in an organic solvent using a ketone compound and reacting the compound with a urethane prepolymer and/or biomass urethane prepolymer, or (d) adopting a compound resulting from ketiminating the amino groups in a polyamine compound in an organic solvent using a ketone compound and adding it to, and mixing under agitation with, a urethane prepolymer and/or biomass urethane prepolymer, followed by addition of water and subsequent chain extension and reaction termination, thereby manufacturing a polyurethane polyurea resin not modified by acid or biomass polyurethane polyurea resin not modified by acid. In particular, preferably, of the aforementioned chain extenders and reaction terminators, one or more types selected from isophoronediamine, N-(2-hydroxyethyl)ethylenediamine, and ethylenediamine is/are adopted.

A polyamine compound ketiminated with a ketone compound has a structure in which the oxygen atoms in the ketone compound have been substituted by the nitrogen atoms in the amino groups in the polyamine compound.

Also, for the ketone compound used, acetone, diethyl ketone, methyl ethyl ketone, diacetone alcohol, or methyl isobutyl ketone is preferred.

Preferably, in this ketiminating reaction, solvents other than the ketone compound are not used.

However, alcohol compounds can be used as solvents other than the ketone compound. In particular, isopropyl alcohol can be used.

The "solvents other than the ketone compound are not used" is defined as ketiminating under solvent-free conditions. It should be noted that, to the extent that doing so does not inhibit the subsequent chain extension reaction or odor-free state of the polyurethane polyurea resin not modified by acid or biomass polyurethane polyurea resin not modified by acid, a polar organic solvent may be compounded instead of using solvent-free conditions.

The present invention may be a printing ink composition containing a polyurethane polyurea resin not modified by acid and biomass polyurethane polyurea resin not modified by acid, obtained through a process of extending the chain and terminating the reaction by the method of c or d above using a ketiminated chain extender and/or reaction terminator, and this printing ink composition, and a laminate printed therewith, do not produce amine odor. Also, the printing ink composition has an effect of increasing peel strength when the printed face is laminated by dry lamination, extrusion lamination, or other means.

It should be noted that a ketiminated amine, etc., may be used as a chain extender, or as a reaction terminator, or both as a chain extender and reaction terminator.

(Synthesis of Polyurethane Polyurea Resin Not Modified by Acid Obtained Using Compound Resulting from Ketiminating Amino Groups in Polyamine Compound with Ketone Compound, and Biomass Polyurethane Polyurea Resin Not Modified by Acid Obtained Using Compound Resulting from Ketiminating Amino Groups in Polyamine Compound with Ketone Compound)

The polyurethane polyurea resin not modified by acid and biomass polyurethane polyurea resin not modified by acid, obtained using a compound resulting from ketiminating the amino groups in a polyamine compound with a ketone compound, can be obtained using a ketimine compound resulting from ketiminating a polyamine compound beforehand with an excess amount of ketone compound, on a urethane prepolymer and/or biomass urethane prepolymer obtained by reacting an organic diisocyanate compound and a high-molecular diol compound, by means of (e) adopting a compound resulting from ketiminating the amino groups in a polyamine compound in an organic solvent using a ketone compound and reacting the compound with the urethane prepolymer and/or biomass urethane prepolymer, or (f) adopting a compound resulting from ketiminating the amino groups in a polyamine compound in an organic solvent using a ketone compound and adding it to, and mixing under agitation with, the urethane prepolymer and/or biomass urethane prepolymer, followed by addition of water and subsequent chain extension and reaction termination.

If a solvent is used at the time of reaction, preferably an ester-based solvent and/or alcohol-based solvent, or more preferably a mixture of ester-based solvent and alcohol-based solvent, or yet more preferably propyl acetate and isopropyl alcohol, is/are used, where most preferably propyl acetate and isopropyl alcohol are used at a ratio by mass in a range of 1:1 to 5: 1.

### (Polyurethane Resin Modified by Acid, and Biomass Polyurethane Resin Modified by Acid)

For the polyurethane resin under the present invention, a polyurethane resin modified by acid and/or biomass polyurethane resin modified by acid can also be adopted. The polyurethane resin modified by acid and/or biomass polyurethane resin modified by acid may be used together with the aforementioned polyurethane resin not modified by acid and/or biomass polyurethane resin not modified by acid, or only the polyurethane resin modified by acid and/or biomass polyurethane resin modified by acid, or only the polyurethane resin not modified by acid and/or biomass polyurethane resin not modified by acid, may be used.

For the polyurethane resin modified by acid and biomass polyurethane resin modified by acid, those obtained by any conventionally known method by reacting the high-molecular diol component being a polyurethane resin-constituting high-molecular diol compound and pyromellitic anhydride or other tetrabasic acid anhydride, or by using a high-molecular diol compound having the free carboxyl groups obtained through ring-opening polymerization of lactones using dimethylolpropionic acid, dimethylolbutanoic acid, etc., as an initiator, or by using dimethylolpropionic acid, dimethylolbutanoic acid, or other hydroxycarboxylic acid, together with a polyurethane resin-constituting high-molecular diol compound, can be used. Preferably the acid value of the polyurethane resin modified by acid and biomass polyurethane resin modified by acid is 70 mgKOH/g or lower.

Other binder resins that can be used with the binder resin are explained.

### (Vinyl Chloride/Vinyl Acetate-based Copolymer)

For the vinyl chloride/vinyl acetate-based copolymer that may be compounded in the printing ink composition for laminate, one manufactured by any known method using any vinyl chloride monomer and vinyl acetate monomer conventionally used in gravure printing ink compositions as the essential components, and if necessary, vinyl propionate, vinyl monochloroacetate, vinyl versatate, vinyl laurate, vinyl stearate, vinyl benzoate, or other fatty acid vinyl monomer or monomer having hydroxyl groups or other functional groups as the copolymerization component, can be used.

A vinyl chloride/vinyl acetate-based copolymer having hydroxyl groups is obtained by partially saponifying an acetic acid ester or introducing a (meth)acrylic monomer having hydroxyl groups.

In the case of a vinyl chloride/vinyl acetate-based copolymer having hydroxyl groups obtained by partially saponifying an acetic acid ester, film properties and solution behaviors of the resin will be determined by the ratio of the structure units based on the reaction location of vinyl chloride (formula 1 below), structure units based on the reaction location of vinyl acetate (formula 2 below), and structure units based on saponification of the reaction location of vinyl acetate (formula 3 below), in the molecule. Specifically, the structure units based on the reaction location of vinyl chloride add toughness and hardness to the resin film, structure units based on the reaction location of vinyl acetate add adhesion property and flexibility, and structure units based on saponification of the reaction location of vinyl acetate add to the printing ink composition good solubility in environmentally friendly organic solvent systems.

Formula 1 -CH₂-CHCl-

Formula 2 -CH₂-CH(OCOCH₃)-

Formula 3 -CH₂-CH(OH)-

It should be noted that, from the viewpoints of solubility in the organic solvent described below used in the printing ink composition for laminate, and of printability, the vinyl chloride/vinyl acetate-based copolymer may have various types of functional groups in the molecule.

Also, when an environmentally friendly solvent is used as the organic solvent, preferably the vinyl chloride/vinyl acetate-based copolymer has 50 to 200 mgKOH/g of hydroxyl groups. Of the commercial products representing such vinyl chloride/vinyl acetate-based copolymer, preferably SOLBIN A, AL, TA5R, TA2, TA3, TAO, TAOL, etc., are used, for example.

### (Vinyl Chloride/Acrylic-based Copolymer)

The vinyl chloride/acrylic-based copolymer that can be compounded in the printing ink composition for laminate is one whose primary component is a copolymer of vinyl chloride and acrylic monomer, where the type of copolymer is not specifically limited. For example, the acrylic monomer may be blocked or randomly inserted in the main chain of polyvinyl chloride, or it may be graft-copolymerized to the side chain of polyvinyl chloride.

For the acrylic monomer, (meth)acrylic acid esters, acrylic monomers having hydroxyl groups, etc., can be used. Examples of the (meth)acrylic acid esters include (meth)acrylic acid alkyl esters, where the alkyl groups may be straight-chain, branched or cyclic, but preferably they are straight-chain alkyl groups.

For example, they include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, tetradecyl (meth)acrylate, hexadecyl (meth)acrylate, octadecyl (meth)acrylate, and the like.

Examples of the acrylic monomers having hydroxyl groups include 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 6-hydroxyhexyl (meth)acrylate, 8-hydroxyoctyl (meth)acrylate, and other (meth)acrylic acid hydroxy alkyl esters, polyethylene glycol mono(meth)acrylate, polypropylene glycol mono(meth)acrylate, 1,4-cyclohexanedimethanol mono(meth)acrylate, and other glycol mono(meth)acrylates, caprolactone-modified (meth)acrylate, hydroxy ethyl acrylamide, and the like.

Also, for the acrylic monomer, acrylic monomers having functional groups other than hydroxyl groups can also be used. Examples of the functional groups other than hydroxyl groups include carboxyl groups, amide bond groups, amino groups, alkylene oxide groups, and the like.

Preferably the vinyl chloride/acrylic-based copolymer has a mass-averaged molecular weight of 10,000 to 70,000.

Also, from the viewpoints of solubility in any environmentally friendly solvent used as the organic solvent, and of adhesion property with respect to base materials, preferably the vinyl chloride/acrylic-based copolymer has hydroxyl groups amounting to 50 to 200 mgKOH/g.

The printing ink composition for laminate can contain the polyurethane resin and (vinyl chloride/vinyl acetate-based copolymer and/or vinyl chloride/acrylic-based copolymer) at a ratio (ratio by mass) of polyurethane resin/(vinyl chloride/vinyl acetate-based copolymer and/or vinyl chloride/acrylic-based copolymer) = 95/5 to 45/55, or preferably 92/8 to 70/30.

It should be noted that the ratio of polyurethane resin/(vinyl chloride/vinyl acetate-based copolymer) may be in a range of 90/10 to 75/25, while that of polyurethane resin/(vinyl chloride/acrylic-based copolymer) may be in a range of 95/5 to 85/15.

And, by containing the polyurethane resin and vinyl chloride/vinyl acetate-based copolymer and/or vinyl chloride/acrylic-based copolymer at a ratio of 95/5 to 45/55, the printing ink composition for laminate will have superior printability and adhesion property with respect to films. Additionally, when the ink composition is to be laminated, it will have superior laminatability.

If the ratio of polyurethane resin/(vinyl chloride/vinyl acetate-based copolymer and/or vinyl chloride/acrylic-based copolymer) exceeds 95/5, the percentage of (vinyl chloride/vinyl acetate-based copolymer and/or vinyl chloride/acrylic-based copolymer) can become low, and adhesion property with respect to films will become insufficient.

If the ratio of polyurethane resin/(vinyl chloride/vinyl acetate-based copolymer and/or vinyl chloride/acrylic-based copolymer) is below 45/55, on the other hand, the percentage of (vinyl chloride/vinyl acetate-based copolymer and/or vinyl chloride/acrylic-based copolymer) becomes high, causing the laminate formed with the printing ink composition to harden, and again adhesion property with respect to films can become insufficient.

Also, the total content of the polyurethane resin and vinyl chloride/vinyl acetate-based copolymer and/or vinyl chloride/acrylic-based copolymer in the printing ink composition for laminate is favorably 5 to 30% by mass.

Also, the printing ink composition for laminate can contain one or more types selected from adhesion-improving agent and anti-blocking agent, or preferably adhesion-improving agent and anti-blocking agent are used together, to the extent that the intended performance of the present invention will not drop.

### (Adhesion-improving Agent)

Examples of the adhesion-improving agent that can be compounded in the printing ink composition for laminate include rosin or derivative thereof, chlorinated polypropylene, dammar resin, and the like, where preferably at least one or more types, or more preferably two or more types, selected from rosin or derivatives thereof is/are contained.

### (Rosin or Derivative Thereof)

Rosin encompasses gum rosin, tall oil rosin, wood rosin, and the like. In general, rosin is an amber-colored amorphous resin obtained from pine and exists as a mixture due to its natural origin; however, constitutional components of rosin such as abietic acid, neoabietic acid, palustric acid, pimaric acid, isopimaric acid, sandaracopimaric acid, and dehydroabietic acid may be isolated and used, and they are also defined as rosin under the present invention.

A rosin derivative is a compound obtained by modifying the rosin, and examples are specifically listed below.
(1) Hydrogenated rosin: Rosin whose weatherability has been improved by adding hydrogen to the conjugated double bonds (hydrogenation).
(2) Disproportionated rosin: Disproportionation refers to a modification involving a reaction of two rosin molecules, converting the abietic acid in the two molecules having conjugated double bonds and turning one molecule into an aromatic molecule and the other into a molecule with isolated double bonds. In general, disproportionated rosin has poorer weatherability than hydrogenated rosin, but demonstrates better weatherability than untreated rosin.
(3) Rosin-modified phenol resin: Rosin-modified phenol resin is sometimes used as a main binder. Rosin-modified phenol resin can be obtained by a known manufacturing method.
(4) Rosin ester: Ester resin derived from rosin, which has been used for a long time as a tackifier in glues/adhesives.
(5) Rosin-modified maleic acid resin: Rosin that has been addition-reacted with maleic acid anhydride, including rosin to which glycerin or other hydroxyl group-containing compound esterified with anhydrous acid groups has been grafted.
(6) Polymerized rosin: Derivative containing a dimerized resin acid, derived from natural resin rosin.

Other types of known rosin or rosin derivatives can also be used, where any one of these can be used alone or two or more can be combined.

Additionally, preferably each rosin or rosin derivative has an acid value of 120 mgKOH/g or higher. When the acid value is 120 mgKOH/g or higher, lamination strength will improve. More preferably the acid value is 160 mgKOH/g or higher. Also, preferably the total use amount of any rosin or derivatives thereof, if compounded in, is 0.1 to 3.0% by mass, in terms of % by mass of solids, in the printing ink composition for laminate.

### (Chlorinated Polypropylene)

For the chlorinated polypropylene, any chlorinated polypropylene with a chlorination degree of 20 to 50 can be used. Chlorinated polypropylene with a chlorination degree under 20 tends to have lower compatibility with organic solvents. If its chlorination degree exceeds 50, on the other hand, such chlorinated polypropylene tends to have lower adhesion property with respect to films. It should be noted that, under the present invention, the chlorination degree is defined by the % by mass of chlorine atoms in the chlorinated polypropylene resin. Also, preferably the chlorinated polypropylene is either a modified or unmodified chlorinated polypropylene with a mass-averaged molecular weight of 5,000 to 200,000. Chlorinated polypropylene with a mass-averaged molecular weight under 5,000 tends to have lower adhesion property. If its mass-averaged molecular weight exceeds 200,000, on the other hand, such chlorinated polypropylene tends to have lower solubility in organic solvents. Also, the use amount of any chlorinated polypropylene, if compounded in, is 0.1 to 3.0% by mass, in terms of % by mass of solids, in the printing ink composition for laminate.

### (Dammar Resin)

Dammar resin, also denoted as dammar or dammar, is a type of plant-derived natural resin. To be specific, it is a type of natural resin obtained from the Dipterocarpaceae or Burseraceae, native to Southeast Asia such as Malaysia and Indonesia. When used, it is dissolved in an appropriate organic solvent and made into a varnish. Since dammar resin does not contain chlorine, using it allows for elimination/reduction of chlorine compared to when chlorinated polypropylene is used in the printing ink composition. Also, preferably the use amount of any dammar resin, if compounded in, is 3.0% by mass or lower, in terms of % by mass of solids, in the printing ink composition for laminate.

### (Anti-blocking Agent)

Examples of the anti-blocking agent include silica particles, polyethylene wax, fatty acid amide, cellulose acetate butyrate resin, cellulose acetate propionate resin, nitrocellulose, and the like, where one or more types, or preferably two or more types, selected from silica particles, polyethylene wax, and fatty acid amide is/are contained, and, depending on the type of pigment, preferably cellulose acetate butyrate resin, cellulose acetate propionate resin, or nitrocellulose is further contained.

### (Silica Particles)

The silica particles include those that are naturally produced or synthesized, crystalline or non-crystalline, hydrophobic or hydrophilic, and the like. Silica particles with an average particle size of 1.0 to 5.0 µm are preferred (it should be noted that the average particle size of silica particles refers to the particle size based on the cumulative 50% value (D50) in particle size distribution and can be obtained by the coulter counter method). The silica particles may be hydrophilic silica having hydrophilic functional groups on their surface, or hydrophobic silica whose hydrophilic functional groups have been modified with an alkyl silane, etc., and hydrophobized, of which the hydrophilic type is preferred, and the hydrophilic silica particles contained in the printing ink composition also have an effect of promoting the wetting/spreading of the printing ink composition during overprinting to improve overprinting effects (hereinafter also referred to as "trapping property"). The use amount of the silica particles is preferably 3.0% by mass or less, or more preferably 0.1 to 1.0% by mass, in the printing ink composition for laminate.

### (Polyethylene Wax)

For the polyethylene wax, preferably those with an average particle size in a range of 1.0 to 3.0 µm (it should be noted that the average particle size refers to the particle size measured by Honeywell's Microtrac UPA) are used. If the particle size of the polyethylene wax is smaller than 1.0 µm, slip property and blocking property will drop, while a particle size larger than 3.0 µm can lead to lower trapping property. Also, preferably the content of the polyethylene wax in the printing ink composition for laminate is in a range of 0.1 to 1.5% by mass. If the content is lower than 0.1% by mass, desired effects cannot be obtained, while a content higher than 1.5% by mass can lead to lower gloss.

### (Nitrocellulose)

For the nitrocellulose, any nitrocellulose conventionally used in gravure printing ink compositions can be used. Nitrocellulose is obtained as a nitric acid ester by reacting natural cellulose with nitric acid to substitute the three hydroxyl groups in the six-member ring of anhydrous glucopyranose groups in the natural cellulose with nitric acid groups. For the nitrocellulose used under the present invention, nitrocellulose having a nitrogen content of 10 to 13% and average polymerization degree of 35 to 90 is favorably used. Specific examples include SS1/2, SS1/4, SS1/8, TR1/16, NCRS-2 (Korea CNC Ltd.), and the like. Regarding the content of the nitrocellulose, preferably the nitrocellulose is used by a range of 0.1 to 2.0% by mass in the printing ink composition for laminate depending on the type of pigment.

### (Cellulose Acetate Propionate Resin)

For the cellulose acetate propionate resin, those conventionally used in gravure printing ink compositions can be used.

A cellulose acetate propionate resin is obtained by triesterifying cellulose with acetic acid and propionic acid, followed by hydrolyzation. In general, cellulose acetate propionate resins with 0.6 to 2.5% by weight of acetylation, 42 to 46% by weight of propionylation, and 1.8 to 5% by weight of hydroxyl groups are commercially available. Preferably the cellulose acetate propionate resin is used by a range of 0.1 to 3.0% by mass in the printing ink composition for laminate depending on the type of pigment.

### (Cellulose Acetate Butyrate Resin)

For the cellulose acetate butyrate resin, those conventionally used in gravure printing ink compositions can be used.

A cellulose acetate butyrate resin is obtained by triesterifying cellulose with acetic acid and butyric acid, followed by hydrolyzation. In general, resins with 2 to 30% by mass of acetylation, 17 to 53% by mass of butyrylation, and 1 to 5% by mass of hydroxyl groups are commercially available. Regarding the use amount of the cellulose acetate butyrate resin, preferably it is used by a range of 0.1 to 3.0% by mass in the printing ink composition for laminate depending on the type of pigment.

### (Fatty Acid Amide)

The fatty acid amide is not specifically limited so long as it has residues left by removing the acid groups from a fatty acid, and amide groups. The fatty acid amide may be, for example, a monoamide, substituted amide, bisamide, methylolamide, ester amide, or the like, of which at least one type selected from the group that consists of monoamide, substituted amide, and bisamide is preferred in the interest of improving anti-blocking property. Preferably the use amount of the fatty acid amide is in a range of 0.01 to 1.0% by mass in the printing ink composition for laminate.

Monoamide: A monoamide is expressed by general formula (1) below:

General formula (1) R₁-CONH₂

(In the formula, R₁ represents a residue left by removing COOH from a fatty acid.)

Specific examples of monoamides include lauric acid amide, palmitic acid amide, stearic acid amide, behenic acid amide, hydroxystearic acid amide, oleic acid amide, erucic acid amide, and the like.

Substituted amide: A substituted amide is expressed by general formula (2) below:

General formula (2) R₂-CONH-R₃

(In the formula, R₂ and R₃ each represent a residue left by removing COOH from a fatty acid and may be the same or different.)

Specific examples of substituted amides include N-oleyl palmitic acid amide, N-stearyl stearic acid amide, N-stearyl oleic acid amide, N-oleyl stearic acid amide, N-stearyl erucic acid amide, and the like.

Bisamide: A bisamide is expressed by general formula (3) or general formula (4) below:

General formula (3) R₄-CONH-R₅-HNCO-R₆

General formula (4) R₇-NHCO-R₈-CONH-R₉

(In the formula, R₄, R₆, R₇, and R₉ each represent a residue left by removing COOH from a fatty acid and may be the same or different, while R₅ and R₈ each represent an alkylene group or arylene group with 1 to 10 carbon atoms.)

Specific examples of bisamides include methylene-bis-stearic acid amide, ethylene-bis-capric acid amide, ethylene-bis-lauric acid amide, ethylene-bis-stearic acid amide, ethylene-bis-hydroxystearic acid amide, ethylene-bis-behenic acid amide, hexamethylene-bis-stearic acid amide, hexamethylene-bis-behenic acid amide, hexamethylene hydroxystearic acid amide, ethylene-bis-oleic acid amide, ethylene-bis-erucic acid amide, hexamethylene-bis-oleic acid amide, N,N'-distearyl adipic acid amide, N,N'-distearyl sebacic acid amide, N,N'-dioleyl adipic acid amide, N,N'-dioleyl sebacic acid amide, and the like.

Methylolamide: A methylolamide is expressed by general formula (5) below:

General formula (5) R₁₀-CONHCH₂OH

(In the formula, R₁₀ represents a residue left by removing COOH from a fatty acid.)

Specific examples of methylolamides include methylol-palmitic acid amide, methylol-stearic acid amide, methylol-behenic acid amide, methylol-hydroxystearic acid amide, methylol-oleic acid amide, methylol-erucic acid amide, and the like.

Ester amide: An ester amide is expressed by general formula (6) below:

General formula (6) R₁₁-CONH-R₁₂-OCO-R₁₃

(In the formula, R₁₁ and R₁₃ each represent a residue left by removing COOH from a fatty acid and may be the same or different, while R₁₂ represents an alkylene group or arylene group with 1 to 10 carbon atoms.)

Specific examples of ester amides include stearylamide ethyl stearate, oleylamide ethyl stearate, and the like.

Preferably the melting point of the fatty acid amide is 50 to 150°C. Also, the fatty acid constituting the fatty acid amide comprises preferably a saturated fatty acid with 12 to 22 carbon atoms and/or unsaturated fatty acid with 16 to 25 carbon atoms, or more preferably a saturated fatty acid with 16 to 18 carbon atoms and/or unsaturated fatty acid with 18 to 22 carbon atoms. For the saturated fatty acid, lauric acid, palmitic acid, stearic acid, behenic acid, and hydroxystearic acid are particularly preferred, and for the unsaturated fatty acid, oleic acid, and erucic acid are particularly preferred.

### (Organic Solvent)

The printing ink composition for laminate for forming a printed layer is oily. The organic solvent used therefor may be, in common with the ink compositions for front printing and shrink printing, for example, methanol, ethanol, isopropanol, normal propanol, butanol, isobutanol, tert-butanol, or other alcohol-based solvent, toluene, xylene, or other aromatic hydrocarbon-based solvent, hexane, cyclohexane, methyl cyclohexane, ethyl cyclohexane, or other aliphatic hydrocarbon-based solvent, acetone, methyl ethyl ketone, methyl isobutyl ketone, cyclohexanone, or other ketone-based solvent, ethyl acetate, n-propyl acetate, isopropyl acetate, butyl acetate, isobutyl acetate, sec-butyl acetate, tert-butyl acetate, or other ester-based solvent, ethylene glycol monomethyl ether, ethylene glycol monoethyl ether, ethylene glycol dimethyl ether, ethylene glycol monobutyl ether, propylene glycol monomethyl ether, propylene glycol monoethyl ether, propylene glycol monopropyl ether, propylene glycol monobutyl ether, or other glycol-based solvent or esterified product thereof, where the esterified product to be selected, which is primarily an acetated product, may be, for example, ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monomethyl ether acetate, propylene glycol monoethyl ether acetate, or the like. Any one of these can be used alone, or two or more types can be combined.

From the aspect of environmental issues, preferably a mixed solvent comprising ester-based organic solvent, alcohol-based organic solvent, and ketone-based organic solvent, or mixed solvent comprising ester-based organic solvent and alcohol-based organic solvent that can better address environmental issues, is used.

Additionally, in the printing ink composition for laminate, a glycol ether-based organic solvent can also be contained by 0.1 to 20% by mass in 100% by mass of organic solvent in order to improve wetting and spreading property. Specific examples of the glycol ether-based organic solvent include ethylene glycol monomethyl ether, diethylene glycol monomethyl ether, ethylene glycol mono-n-propyl ether, ethylene glycol monoisopropyl ether, diethylene glycol monoisopropyl ether, ethylene glycol monobutyl ether, diethylene glycol monobutyl ether, ethylene glycol monoisobutyl ether, propylene glycol monomethyl ether, dipropylene glycol monomethyl ether, propylene glycol mono-n-propyl ether, diethylene glycol dimethyl ether, diethylene glycol methyl ethyl ether, diethylene glycol diethyl ether, and the like.

Preferably water is contained in the printing ink composition for laminate from the viewpoints of mitigation of printing problems caused by static electricity as well as fogging prevention and cell reproducibility. The use amount of the water is preferably 10% by mass or less, or more preferably in a range of 0.1 to 5.0% by mass, in the printing ink composition for laminate.

### (Other Materials)

Various types of additives such as pigment dispersant, anti-static agent, plasticizer, etc., can be added to the printing ink composition for laminate.

### (Method for Manufacturing Laminate Printing Ink Composition)

Regarding the method for manufacturing the printing ink composition for laminate using the above constituent materials, a method of mixing under agitation the pigment, binder resin, organic solvent, and if necessary, pigment dispersant, surfactant, etc., and then kneading the mixture utilizing any of various types of kneading machines including a bead mill, ball mill, sand mill, attritor, roll mill, pearl mill, etc., for example, and then further adding the various types of specified additives and remaining materials and mixing them, is utilized.

Also, metal tetraalkoxides and/or hydroxy acids may or may not be contained.

### (Printing Method Using Printing Ink Composition for Laminate, and Laminate Obtained by Same)

Next, the method for obtaining a laminate by lamination using the printing ink composition for laminate is explained.

The laminate by lamination under the present invention is formed by a resin base material, a releasing primer layer, a printed layer, and a sealant layer, in this order; however, any layer known to be used in laminates by lamination, such as anchor coating agent layer, adhesive layer, etc., may or may not be provided between the respective layers. Also, the resin base material, releasing primer layer, printed layer, and sealant layer may each be formed by multiple layers. Additionally, it may be formed by a resin base material, a releasing primer layer, a printed layer, a releasing primer layer, a printed layer, and a sealant layer, for example, in this order.

Methods for obtaining a laminate by lamination include at least the printing method below.

For example, the releasing primer composition proposed by the present invention is coated on the resin base material being a known resin film that will constitute a base material for laminate. On the obtained releasing primer composition layer, the printing ink composition for laminate is printed inline or offline once or more times by gravure printing or any other type of printing, and then dried with a dryer.

The printing speed and drying temperature of the printing ink composition for laminate can be adopted from known speeds and temperatures as deemed appropriate.

### (Sealant Layer)

By using any of various methods to laminate the laminate printing ink composition layer side of the laminate obtained by the aforementioned method, and thereby forming a sealant layer, a laminate by lamination for packaging bag, etc., can be obtained. For the method for this lamination, the extrusion lamination method wherein a molten polymer is layered on the surface of the laminate after coating an anchor coating agent thereon or without coating any such agent, or dry lamination method wherein a film-like polymer is bonded on the surface of the laminate after coating an adhesive thereon, can be utilized.

And, for this resin layer formed by extrusion lamination or film-like polymer formed by dry lamination, a VMCPP (aluminum vapor deposition cast polypropylene) or other resin film can be adopted. Particularly in the case of VMCPP, the VMCPP itself constituting the sealant layer can be released in the release process using the release solution described below.

The extrusion lamination method represents a method of layering a molten resin, using a known extrusion lamination machine, on the surface of the laminate including the layer constituted by the printing ink composition after coating thereon a titanium-based, urethane-based, imine-based, polybutadiene-based, or other anchor coating agent as necessary to form an anchor coating agent layer, or without coating any such agent, where additionally a molten resin can be layered as an intermediate layer by sandwiching it between the other materials. It should be noted that, in this case, it is not necessary to use a polyethyleneimine-based anchor coating agent.

For the molten resin used under the extrusion lamination method, any low-density polyethylene or other polyethylene polypropylene or other polyolefin resin, ethylenevinyl acetate copolymer, or other conventionally used resin can be used. In particular, the effects of the present invention can be increased under a constitution using a low-density polyethylene that facilitates the production of carbonyl groups due to oxidation at the time of melting.

Meanwhile, the dry lamination method represents a method of coating a urethane-based, isocyanate-based, or other adhesive on the surface of the layer constituted by the laminate printing ink composition and then bonding a resin film on the obtained adhesive layer using a known dry lamination machine. In particular, to obtain a packaging material used in retort applications, an aluminum foil can be sandwiched between the base material and the resin film bonded thereto prior to lamination. Such laminated product can also be made into a bag and filled with a content, and then used in boiled-in-retort applications.

The resin film used here may be a cast polyethylene film, cast propylene film, cast propylene film having a metal vapor deposition layer, polyester film, nylon film, or the like. Additionally, regarding these resin films, films that have been processed beforehand by coating or kneading in an antifogging agent, surface-coating, or kneading in a matting agent, and the like, can also be used.

Also, various types of plastic films for printing that have been metal vapor-deposited, films on which a barrier layer has been stacked by coating a barrier resin, and the like, can be used as these resin films.

### Examples

The present invention is explained in greater detail below using examples; however, the present invention is not limited to these examples alone. It should be noted that, unless otherwise specified, "%" refers to "% by mass," while "part" refers to "part by mass." Also, the number indicating the amount of each material in the tables also represents "parts by mass." The releasing primer compositions used in the Examples and Comparative Examples are mixtures whose solvent makeup by mass is ethanol 8 : water 2. It should be noted that they are not limited to these mixtures.

### <Examples and Comparative Examples>

### <Example of Manufacturing Polyurethane Resin Varnish 1 (Biomass Polyurethane)>

In a four-way flask fitted with an agitator, a cooling tube, and a nitrogen gas introduction tube, 200 parts by mass of a polyester diol of 2,000 in mass-averaged molecular weight obtained from 30/70 (ratio by mass) sebacic acid (derived from castor oil)/succinic acid (plant derived) and 1,3-propanediol (plant derived), 17.6 parts by mass of isophorone diisocyanate, and 21.0 parts by mass of hydrogenated MDI were added, and the materials were reacted for 6 hours at 100 to 105°C while introducing nitrogen gas. After letting the mixture cool to near room temperature, 400 parts by mass of ethyl acetate and 171 parts by mass of isopropyl alcohol were added, after which 8.2 parts by mass of isophoronediamine were added to extend the chain, and 0.35 parts by mass of monoethanolamine were further added to cause reaction, and subsequently 1.3 parts by mass of isophoronediamine and 0.6 parts by mass of diethylenetriamine were added to terminate the reaction, to obtain polyurethane resin varnish 1 (solids content 30% by mass, amine value 6.4 mgKOH/g).

### <Example of Manufacturing Polyurethane Resin Varnish 2 (Not Biomass Polyurethane)>

In a four-way flask fitted with an agitator, a cooling tube, and a nitrogen gas introduction tube, 100 parts by mass of a 3-methyl-1,5-pentylene adipate diol of 2,000 in number-averaged molecular weight, 100 parts by mass of a polypropylene glycol of 2,000 in mass-averaged molecular weight, 17.6 parts by mass of isophorone diisocyanate, and 21.0 parts by mass of hydrogenated MDI were added, and the materials were reacted for 6 hours at 100 to 105°C while introducing nitrogen gas. After letting the mixture cool to near room temperature, 400 parts by mass of ethyl acetate and 171 parts by mass of isopropyl alcohol were added, after which 8.2 parts by mass of isophoronediamine were added to extend the chain, and 0.35 parts by mass of monoethanolamine were further added to cause reaction, and subsequently 1.3 parts by mass of isophoronediamine and 0.6 parts by mass of diethylenetriamine were added to terminate the reaction, to obtain polyurethane resin varnish 2 (solids content 30% by mass, amine value 6.4 mgKOH/g).

### <Example of Manufacturing Polyurethane Resin Varnish 3 (Using Polyurethane Resin Obtained Using Compound Resulting from Ketiminating Amino Groups in Polyamine Compound with Ketone Compound)>

### (Method for Manufacturing Ketimine Solution)

51 parts of isophoronediamine, 31.2 parts of N-(2-hydroxyethyl)ethylenediamine, and 174 parts of acetone were mixed and the mixture was agitated for 1 hour at room temperature, to obtain a ketimine solution 1.

### (Method for Manufacturing Polyurethane Resin)

In a four-way flask fitted with an agitator, a cooling tube, and a nitrogen gas introduction tube, 400 parts of a 3-methyl-1,5-pentylene adipate diol of 4,000 in number-averaged molecular weight, 33.3 parts of isophorone diisocyanate, and 0.04 parts of tetrabutyl titanate were added, and the mixture was reacted for 6 hours at 90 to 100°C while introducing nitrogen gas.

Next, 812 parts of propyl acetate and 203 parts of isopropyl alcohol were added, after which the mixture was cooled to near room temperature, and then 32.29 parts of the ketimine solution were added and the mixture was agitated for 20 minutes, and 3 parts of water were further added and the mixture was agitated for 15 minutes, to obtain polyurethane resin varnish 3 of 35,000 in mass-averaged molecular weight and 6.5 mgKOH/g in amine value (solids content 30%).

### <Vinyl Chloride/Vinyl Acetate-based Copolymer>

SOLBIN TA-3, Nissin Chemical Industry Co., Ltd.

### <Rosin or Derivative Thereof>

Polymerized rosin: Acid value 160 mgKOH/g

### <Chlorinated Polypropylene Varnish>

40 parts by mass of a chlorinated polypropylene (solids content 50%) of 40% in chlorination degree and 100,000 in mass-averaged molecular weight and 60 parts by mass of methylcyclohexane were mixed under agitation, to obtain a chlorinated polypropylene varnish of 20% in solids content.

### <Silica Particles>

Average particle size: 4.5 µm

### <Polyethylene Wax>

Average particle size: 2.11 µm

### <Fatty Acid Amide>

Ethylene-bis-stearic acid amide

### <Example of Manufacturing Printing Ink Composition for Laminate>

10 parts by mass of a pigment (C. I. PB 15:4), 30 parts by mass of each of polyurethane resin varnishes 1 to 3, and 3 parts by mass of a vinyl chloride/vinyl acetate-based copolymer (SOLBIN TA-3) were kneaded using a paint conditioner by Red Devil, Inc., to which 2 parts by mass of a chlorinated propylene varnish (solids content 20%), 0.5 parts by mass of polymerized rosin, 0.5 parts by mass of silica particles, 0.2 parts by mass of polyethylene wax, 0.2 parts by mass of ethylene-bis-stearic acid amide, 51 parts by mass of a mixed solvent (ethyl acetate/propyl acetate/isopropyl alcohol = 50/30/20), and 2 parts by mass of water were further added, to obtain printing ink compositions for laminate 1 to 3, respectively; one of which used polyurethane resin varnish 1 was designated as printing ink composition for laminate 1, one of which used polyurethane resin varnish 2 was designated as printing ink composition for laminate 2, and one of which used polyurethane resin varnish 3 was designated as printing ink composition for laminate 3.

### ((Resin Base Material) Printing Base Material)

PET: Polyethylene terephthalate film: E-5102 #12m (Toyobo Co., Ltd.)
NY: Nylon film: ON-15 #12 (Unitika Ltd.)
Vapor deposition polyethylene terephthalate film: GL-ARH-F (Toppan Printing Co., Ltd.)
Vapor deposition nylon film: GL-AEY-W (Toppan Printing Co., Ltd.)

### (Releasing Primer)

Each polyethyleneimine shown in Table 1 below (product names EPOMIN (Nippon Shokubai Co., Ltd.) and LUPASOL P (BASF SE))
PVA: POVAL 28-98 (polyvinyl alcohol of 90% or higher in saponification degree) (Kuraray Co., Ltd.)
Polyurethane: Polyurethane resin varnish 2 described above
Silane coupling agent containing glycidyl groups: 3-glycidyloxypropyl trimethoxysilane, 3-glycidyloxypropyl triethoxysilane
Silane coupling agent containing isocyanate groups: Triethoxy(3-isocyanatopropyl)silane
Siloxane-modified polyethyleneimine compound: Trimethoxysilylpropyl-modified (polyethyleneimine) (product name: SSP-060, Gelest, Inc., molecular weight 1,500 to 1,800, amine value 10 mmol/g; the amine value is measured by acid titration in a nonaqueous system, while the amine ratio is measured by NMR (13C).)

**[Table 1]**

| | Number-averaged molecular weight | Mass-averaged molecular weight | Amine value (mmol/g) | Amine ratio (primary : secondary : tertiary) (%)) |
|---|---|---|---|---|
| EPOMIN P-1000 | 70,000 | 350,000 | 18 | 25/50/25 |
| EPOMIN P-3000 | 100,000 | 450,000 | 18 | 30/40/30 |
| Lupasol P | - | 750,000 | 18 | 37/37/26 |

Molecular weight: P-1000, P-3000/Number-averaged molecular weight based on viscosity method (Mn)
Mass-averaged molecular weight: Mass-averaged molecular weight based on GPC (Mw)
Amine value: Measured by acid titration in a nonaqueous system.
Amine ratio: Measured by NMR (13C) (ratio of the number of primary amino groups, number of secondary amino groups and number of tertiary amino groups). (Lamination Film)
CPP: Cast propylene film: RXC-22 (Mitsui Chemicals Tohcello, Inc.)
AL/CPP: Aluminum vapor deposited cast propylene film: CP-WS (Mitsui Chemicals Tohcello, Inc.)

### (Lamination Printing, Creation of Laminate, Test Results)

### <When Each Releasing Primer Composition Is Coated>

On one side of each resin base material, each releasing primer composition shown in Table 2 below was coated using a gravure printing machine and dried under the following conditions to achieve the laminate structure below. It should be noted that the coating amount of the releasing primer composition in each of the Examples and Comparative Examples in Table 2 represents the amount of solids of each component in the coating layer per unit area. And, the solids concentration of each component in each releasing primer composition represents, when it is made into a coating layer, a concentration corresponding to 0.02 g/m² of each polyethyleneimine compound in the coating layer, or a concentration corresponding to the content of the silane coupling agent having glycidyl groups or silane coupling agent having isocyanate groups in the coating amount. In addition, the solids concentration of the siloxane-modified polyethyleneimine compound represents, when the releasing primer composition is made into a coating layer, a concentration corresponding to 0.12 g/m² of the siloxane-modified polyethyleneimine compound in the coating layer. Also, the solids concentration of the polyvinyl alcohol or polyurethane represents, when the releasing primer composition is made into a coating layer, a concentration corresponding to 0.02 g/m² of the polyvinyl alcohol or polyurethane in the coating layer.

Furthermore, the ratio (by equivalent number) of the number of glycidyl groups in the silane coupling agent containing glycidyl groups relative to the total sum of the number of primary amino groups and number of secondary amino groups in the polyethyleneimine compound in the table, and the ratio (by equivalent number) of the number of isocyanate groups in the silane coupling agent containing isocyanate groups to the total sum of the number of primary amino groups and number of secondary amino groups in the polyethyleneimine compound in the table, are obtained based on the concept below. Specifically, they represent the value obtained by dividing the number of the glycidyl groups in the silane coupling agent, by the total sum of the number of the primary amino groups and number of the secondary amino groups, in the coated releasing primer composition, and the value obtained by dividing the number of the isocyanate groups in the silane coupling agent, by the total sum of the number of the primary amino groups and number of the secondary amino groups, in the coated releasing primer composition. Also, on the surface of this layer of each releasing primer composition, each diluted ink composition obtained by further adding an 80/20 mixed solvent of normal propyl acetate/isopropyl alcohol to each of printing ink compositions for laminate 1 to 3 and diluting the mixture to 16 seconds using Zahn Cup No. 3 by Rigosha & Co., Ltd., was printed using a gravure printing machine and dried under the following conditions, to obtain a laminate.

### (In the Case of Dry Laminate)

On the layer constituted by each printing ink composition for laminate provided on the coating layer of the releasing primer composition, an adhesive (TAKELAC A-515/TAKELAC A-50, solids content 30% by mass) was coated, and AL/CPP (aluminum vapor deposited CPP) or CPP was further adhered thereon using a dry lamination machine, to create a laminate by lamination of the structure below.

### (In the Case of Extruded Laminate)

On the layer constituted by each printing ink composition for laminate provided on the coating layer of the releasing primer composition, an anchor coating agent (TAKELAC A-3210/TAKENATE A-3072, solids content 7% by mass) was coated, and molten polyethylene was further layered thereon using an extrusion lamination machine, to create a laminate by lamination of the structure below.

It should be noted that Comparative Example 6 in Table 2 below represents an instance where no releasing primer composition was coated.

### <When Each Releasing Primer Composition Is Not Coated>

On one treated side of each resin base material, each diluted ink composition obtained by further adding an 80/20 mixed solvent of normal propyl acetate/isopropyl alcohol to each of printing ink compositions for laminate 1 to 3 and diluting the mixture to 16 seconds using Zahn Cup No. 3 by Rigosha & Co., Ltd., was printed using a gravure printing machine and dried under the following conditions to achieve the laminate structure below, to obtain a laminate.

In the case of a dry laminate, an adhesive (TAKELAC A-969V/TAKELAC A-5, solids content 30% by mass) was coated on top, and AL/CPP (aluminum vapor deposited CPP) or CPP was further adhered thereon using a dry lamination machine, to create a laminate by lamination.

In the case of an extruded laminate, an anchor coating agent (TAKELAC A-3210/TAKENATE A-3072, solids content 7% by mass) was coated on top, and molten PE (SUMIKATHENE L705) was further layered thereon using an extrusion lamination machine, to create a laminate by lamination.

### (Conditions for Coating Each Releasing Primer Composition)

Coating machine: Gravure printing machine
Coating speed: 100 m/min
Printing plate: Helio 175 lines/inch (130°) solid plate
Drying temperature: 70°C

### (Printing Conditions for Printing Ink Composition for Laminate)

Coating machine: Gravure printing machine
Coating speed: 100 m/min
Printing plate: Helio 175 lines/inch (130°) solid plate
Drying temperature: 55°C

**[Table 2]**

| | | Polyethyleneimine compound | | Silane coupling agent having glycidyl groups | | Ratio of number of glycidyl groups in silane coupling agent relative to number of amino groups in polyethyleneimine compound | Solids content of releasing primer when printing with Helio 175 lines/inch (130°) (%) |
|---|---|---|---|---|---|---|---|
| | | Product number | Content in primer coating amount (g/m²) | Product number | Content in primer coating amount (g/m²) | | |
| Examples | 1 | P-1000 | 0.02 | 3-glycidyloxypropyl trimethoxysilane | 0.02 | 0.31 | 0.66 |
| | 2 | | 0.02 | | 0.06 | 0.94 | 1.32 |
| | 3 | | 0.02 | | 0.1 | 0.16 | 1.65 |
| | 4 | | 0.02 | | 0.14 | 2.2 | 2.64 |
| | 5 | | 0.02 | 3-glycidyloxypropyl methoxydiethoxysilane | 0.1 | 0.15 | 1.69 |
| | 6 | P-3000 | 0.02 | 3-glycidyloxypropyl trimethoxysilane | 0.06 | 1 | 1.32 |
| | 7 | | 0.02 | | 0.1 | 1.7 | 1.65 |
| | 8 | | 0.02 | | 0.14 | 2.4 | 2.64 |
| | 9 | Lupasol P | 0.02 | 3-glycidyloxypropyl trimethoxysilane | 0.06 | 0.97 | 1.32 |
| | 10 | | 0.02 | | 0.1 | 1.6 | 1.65 |
| | 11 | | 0.02 | | 0.14 | 2.3 | 2.64 |
| Comparative Examples | 1 | P-1000 | 0.02 | 3-glycidyloxypropyl trimethoxysilane | 0.01 | 0.16 | 0.5 |
| | 2 | | 0.02 | | 0.2 | 3.1 | 3.63 |
| | 3 | | 0.02 | - | - | - | 0.33 |
| | 4 | PVA | 0.02 | - | - | - | 0.33 |
| | 5 | Polyurethane | 0.02 | - | - | - | 0.33 |
| | 6 | - | - | - | - | - | - |

| | | Polyethyleneimine compound | | Silane coupling agent having isocyanate groups | | Ratio of number of glycidyl groups in silane coupling agent relative to number of amino groups in polyethyleneimine compound | Solids content in releasing primer composition (%) |
|---|---|---|---|---|---|---|---|
| | | Product number | Content in coating layer of releasing primer composition (g/m²) | Product number | Content in coating layer of releasing primer composition (g/m²) | | |
| Example | 12 | P-1000 | 0.02 | Triethoxy(3-isocyanatopropyl)silane | 0.1 | 1.5 | 1.65 |

| | | Silane coupling-modified polyethyleneimine compound | | | | | Solids content in releasing primer composition (%) |
|---|---|---|---|---|---|---|---|
| | | Product number | Content in coating layer of releasing primer composition (g/m²) | | | | |
| Example | 13 | Trimethoxypropyl-modified (polyethyleneimine) | 0.12 | | | | 1.65 |

### (Examples and Comparative Examples)

### <Dry Laminate (The results of the Examples and Comparative Examples are shown in Tables 3 and 4.)>

(Laminate Structures 1 to 3 (Releasing Primer Layer Present Only between Resin Base Material and Printed Layer)

### Laminate Structure 1

Resin base material (PET (E-5102 #12))/each releasing primer composition in Example or Comparative Example/each printing ink composition for laminate/adhesive (TAKELAC A-515/TAKELAC A-50, solids content 30% by mass)/AL/CPP Laminate Structure 2

Resin base material (NY (ON-15 #12))/each releasing primer composition in Example or Comparative Example/each printing ink composition for laminate/adhesive (TAKELAC A-515/TAKELAC A-50, solids content 30% by mass)/CPP

### Laminate Structure 3

Resin base material (vapor deposition polyethylene terephthalate film (GL-ARH-F) or vapor deposition nylon film (GL-AEY-W))/each releasing primer composition in Example or Comparative Example/each printing ink composition for laminate/adhesive (TAKELAC A-515/TAKELAC A-50, solids content 30% by mass)/CPP (Laminate Structures 4 to 6 (Releasing Primer Layer Present Both between Resin Base Material and Printed Layer and between Printed Layer and Sealant Layer))

It should be noted that, in these Examples, the releasing primer layer between the resin base material and printed layer, and the releasing primer layer between the printed layer and sealant layer, are formed by the same releasing primer composition.

### Laminate Structure 4

Resin base material (PET (E-5102 #12))/each releasing primer composition in Example or Comparative Example/each printing ink composition for laminate/adhesive (TAKELAC A-515/TAKELAC A-50, solids content 30% by mass)/each releasing primer composition in Example or Comparative Example/CPP

### Laminate Structure 5

Resin base material (NY (ON-15 #12))/each releasing primer composition in Example or Comparative Example/each printing ink composition for laminate/adhesive (TAKELAC A-515/TAKELAC A-50, solids content 30% by mass)/each releasing primer composition in Example or Comparative Example/CPP

### Laminate Structure 6

Resin base material (vapor deposition polyethylene terephthalate film (GL-ARH-F) or vapor deposition nylon film (GL-AEY-W))/each releasing primer composition in Example or Comparative Example/each printing ink composition for laminate/adhesive (TAKELAC A-515/TAKELAC A-50, solids content 30% by mass)/each releasing primer composition in Example or Comparative Example/CPP

### (Laminate Structures 7 to 9 (No Releasing Primer Layer))

### Laminate Structure 7

Resin base material (PET (E-5102 #12))/each printing ink composition for laminate/adhesive (TAKELAC A-515/TAKELAC A-50, solids content 30% by mass)/AL/CPP

### Laminate Structure 8

Resin base material (NY (ON-15 #12))/each printing ink composition for laminate/adhesive (TAKELAC A-515/TAKELAC A-50, solids content 30% by mass)/CPP

### Laminate Structure 9

Resin base material (vapor deposition ethylene terephthalate film (GL-ARH-F) or vapor deposition nylon film (GL-AEY-W))/each printing ink composition for laminate/adhesive (TAKELAC A-515/TAKELAC A-50, solids content 30% by mass)/CPP

### <Extruded Laminate (The results of the Examples and Comparative Examples are shown in Tables 5 and 6.)>

(Laminate Structures 10 to 12 (Releasing Primer Layer Present Only between Resin Base Material and Printed Layer)

### Laminate Structure 10

Resin base material (PET (E-5102 #12))/each releasing primer composition in Example or Comparative Example/each printing ink composition for laminate/anchor coating agent (TAKELAC A-3210/TAKENATE A-3072, solids content 7% by mass)/molten PE (SUMIKATHENE L705)

### Laminate Structure 11

Resin base material (NY (ON-15 #12))/each releasing primer composition in Example or Comparative Example/each printing ink composition for laminate/anchor coating agent (TAKELAC A-3210/TAKENATE A-3072, solids content 7% by mass)/molten PE (SUMIKATHENE L705)

### Laminate Structure 12

Resin base material (vapor deposition polyethylene terephthalate film (GL-ARH-F) or vapor deposition nylon film (GL-AEY-W))/each releasing primer composition in Example or Comparative Example/each printing ink composition for laminate/anchor coating agent (TAKELAC A-3210/TAKENATE A-3072, solids content 7% by mass)/molten PE (SUMIKATHENE L705)

(Laminate Structures 13 to 15 (Releasing Primer Layer Present Both between Resin Base Material and Printed Layer and between Printed Layer and Sealant Layer))

It should be noted that, in these Examples, the releasing primer layer between the resin base material and printed layer, and the releasing primer layer between the printed layer and sealant layer, are formed by the same releasing primer composition.

### Laminate Structure 13

Resin base material (PET (E-5102 #12))/each releasing primer composition in Example or Comparative Example/each printing ink composition for laminate/each releasing primer composition in Example or Comparative Example/anchor coating agent (TAKELAC A-3210/TAKENATE A-3072, solids content 7% by mass)/molten PE (SUMIKATHENE L705)

### Laminate Structure 14

Resin base material (NY (ON-15 #12))/each releasing primer composition in Example or Comparative Example/each printing ink composition for laminate/each releasing primer composition in Example or Comparative Example/anchor coating agent (TAKELAC A-3210/TAKENATE A-3072, solids content 7% by mass)/molten PE (SUMIKATHENE L705)

### Laminate Structure 15

Resin base material (vapor deposition polyethylene terephthalate film (GL-ARH-F) or vapor deposition nylon film (GL-AEY-W))/each releasing primer composition in Example or Comparative Example/each printing ink composition for laminate/each releasing primer composition in Example or Comparative Example/anchor coating agent (TAKELAC A-3210/TAKENATE A-3072, solids content 7% by mass)/molten PE (SUMIKATHENE L705)

(Laminate Structures 16 to 18 (No Releasing Primer Layer))

### Laminate Structure 16

Resin base material (PET (E-5102 #12))/each printing ink composition for laminate/anchor coating agent (TAKELAC A-3210/TAKENATE A-3072, solids content 7% by mass)/molten PE (SUMIKATHENE L705)

### Laminate Structure 17

Resin base material (NY (ON-15 #12))/each printing ink composition for laminate/anchor coating agent (TAKELAC A-3210/TAKENATE A-3072, solids content 7% by mass)/molten PE (SUMIKATHENE L705)

### Laminate Structure 18

Resin base material (vapor deposition polyethylene terephthalate film (GL-ARH-F) or vapor deposition nylon film (GL-AEY-W))/each printing ink composition for laminate/anchor coating agent (TAKELAC A-3210/TAKENATE A-3072, solids content 7% by mass)/molten PE (SUMIKATHENE L705)

In the Examples and Comparative Examples, layers of the releasing primer compositions shown in Table 2 above were formed with PET film, NY film, vapor deposition polyethylene terephthalate film, and vapor deposition nylon film used as the resin base material, respectively, and the following evaluations were performed.

### <Deinking (Evaluation of Ink Release Property)>

Each of the above laminates that had been fully dried after printing was taken by 1.5 g and shredded into small pieces of MD 15 mm × TD 25 mm or so, to obtain ink release property test samples.

### (Preparation of Release Solution Comprising Aqueous Alkali Solution)

2.0 parts by mass of sodium hydroxide were added to 98.0 parts by mass of water and dissolved under agitation, to obtain a release solution comprising aqueous alkali solution.

### (Preheating of Release Solution Comprising Aqueous Alkali Solution)

100 grams of the release solution comprising aqueous alkali solution were put in each HDPE (high-density polyethylene) container of 200 cc in volume, and the container was heated in a hot water bath until the solution temperature reached 70°C.

### (Releasing)

After each release solution had reached 70°C, the above ink release property test samples were put into the release solution comprising aqueous alkali solution and the mixture was agitated using stainless-steel agitation blades of 25 mm in blade diameter for 30 minutes in the case of the release solution comprising aqueous alkali solution. After agitation, the HDPE (high-density polyethylene) container was removed from the hot water bath and let stand stationary for 5 minutes at room temperature. The release solution and film pieces of respective types were separated using a stainless-steel net of approx. 2 mm in mesh size.

### (Rinsing)

The released films of respective types were transferred to a 200-cc HDPE container to which 100 g of water were added. The water was agitated for 5 minutes using stainless-steel agitation blades of 25 mm in blade diameter. After the water had been left stationary for 5 minutes, the film pieces of respective types and water were separated using a stainless-steel net. After drying the film pieces of respective types, release property of the ink from the films of respective types was visually evaluated.

Releasing conditions (alkali): Agitate for 30 minutes in a 70°C, 2% aqueous sodium hydroxide solution.

### (Evaluation Criteria)

○: The ink film completely peels off from the resin base material film and sealant film as a film piece.
△: The ink film is completely released from the resin base material film as a film piece, but not released from the sealant film.
×: The ink film peels from neither the resin base material film nor the sealant film.

### <Adhesion Property (Tape Adhesion Strength (Each Laminate Immediately after Printing and Drying))>

On the treated side of each of the respective types of films, each releasing primer composition that had been diluted as shown in Table 2 above in order to achieve a specified coating amount was coated using a gravure printing machine and dried under the following conditions. On the surface of this layer of each releasing primer composition, each diluted printing ink composition for laminate obtained by further adding an 80/20 mixed solvent of normal propyl acetate/isopropyl alcohol to each printing ink composition for laminate and diluting the mixture to 16 seconds using Zahn Cup No. 3 by Rigosha & Co., Ltd., was printed using a gravure printing machine and dried under the above conditions, to obtain each laminate.

An adhesive cellophane tape was adhered to the printed side of each of the obtained laminates and quickly peeled, to evaluate adhesion property according to the evaluation criteria below based on the degree of peeling of the printed film.

### (Evaluation Criteria)

○: The printed film peels from the film by less than 5% in area ratio.
△: The printed film peels from the film by 5% or more but less than 30% in area ratio.
×: The printed film peels from the film by 30% or more in area ratio.

### <Anti-blocking Property>

On the treated side of each of the respective types of films, each releasing primer composition that had been diluted as shown in Table 2 above was coated using a gravure printing machine and dried under the following conditions. On the surface of this layer of each releasing primer composition, each diluted printing ink composition for laminate obtained by further adding an 80/20 mixed solvent of normal propyl acetate/isopropyl alcohol to each printing ink composition for laminate and diluting the mixture to 16 seconds using Zahn Cup No. 3 by Rigosha & Co., Ltd., was printed using a gravure printing machine and dried under the following conditions; thereafter, the printed side of each laminate and untreated side of each film were put together and left standing for 12 hours at 40°C under a load of 400 g/cm², after which each film was peeled to evaluate anti-blocking property based on the peeling condition.

### (Evaluation Criteria)

○: The film peels without resistance and there is no transfer of the ink film at all.
△: Resistance is felt, but there is no transfer of the ink film at all.
×: Transfer of the ink film is observed.

### <Peel Strength (Pre-retort)>

Once obtained, each laminate by lamination was cut to 15 mm in width and measured for T-peel strength using a peel tester manufactured by Yasuda Seiki Seisakusho, Ltd.

### (Evaluation Criteria)

○: The peel strength is 5 N/15 mm or higher.
△: The peel strength is 3 N/15 mm or higher but under 5 N/15 mm.
×: The peel strength is under 3 N/15 mm.

### <Peel Strength (Post-retort)>

After each laminate by lamination had been obtained, the laminate was made into a bag which was filled with a mixture of 90% by weight of water and 10% by weight of salad oil and sealed, and then immersed for 60 minutes in 135°C pressurized hot water in the case of a printed PET with an AL/CPP sealant layer, or for 60 minutes in 120°C pressurized hot water in the case of a printed PET with a CPP sealant layer, or for 60 minutes in 120°C pressurized hot water in the case of a printed NY, after which each laminate was cooled to room temperature and cut to 15 mm in width for measurement of T-peel strength using a peel tester manufactured by Yasuda Seiki Seisakusho, Ltd.

### (Evaluation Criteria)

○: The peel strength is 5 N/15 mm or higher.
△: The peel strength is 3 N/15 mm or higher but under 5 N/15 mm.
×: The peel strength is under 3 N/15 mm.

The evaluations below were the same regardless of which of the printing ink compositions for laminate using three types of polyurethane resin varnishes (polyurethane resin varnish 1 (biomass polyurethane), polyurethane resin varnish 2 (not biomass polyurethane), polyurethane resin varnish 3 (polyurethane resin varnish obtained using a compound resulting from ketiminating the amino groups in a polyamine compound with a ketone compound)) was used. Accordingly, Table 3 to Table 6 below show the results of the dry laminates, while Table 7 to Table 10 below show the results of the extruded laminates, pertaining to polyurethane resin varnish 1 (biomass polyurethane). Tables 3 and 7 represent instances where a releasing primer layer is present only between the resin base material and printed layer, Tables 4 and 8 represent instances where a releasing primer layer is present both between the resin base material and printed layer, and between the printed layer and sealant layer, Tables 5 and 9 represent instances where a releasing primer layer is present only between the resin base material and printed layer or no releasing primer layer is present there, and Tables 6 and 10 represent instances where a releasing primer layer is present both between the resin base material and printed layer and between the printed layer and sealant layer or no releasing primer layer is present there.

**[Table 3]**

| | Releasing primer composition | Resin base material: PET, sealant layer: AL/CPP (laminate structure 1) | | | | | Resin base material: NY, sealant layer: CPP (laminate structure 2) | | | | | Resin base material: vapor deposition polyester film, vapor deposition nylon film NY, sealant layer: CPP (laminate structure 3) | | | | |
|---|---|---|---|---|---|---|---|---|---|---|---|---|---|---|---|---|
| | | Deinking | Adhesion property | Anti-blocking property | Peel strength | | Deinking | Adhesion property | Anti-blocking property | Peel strength | | Deinking | Adhesion property | Anti-blocking property | Peel strength | |
| | | Aqueous alkali solution | Immediately after printing | | Pre-retort | Post-retort | Aqueous alkali solution | Immediately after printing | | Pre-retort | Post-retort | Aqueous alkali solution | Immediately after printing | | Pre-retort | Post-retort |
| Example 1 | A | ○ | ○ | ○ | ○ | ○ | Δ | ○ | ○ | ○ | ○ | Δ | ○ | ○ | ○ | ○ |
| Example 2 | B | ○ | ○ | ○ | ○ | ○ | Δ | ○ | ○ | ○ | ○ | Δ | ○ | ○ | ○ | ○ |
| Example 3 | C | ○ | ○ | ○ | ○ | ○ | Δ | ○ | ○ | ○ | ○ | Δ | ○ | ○ | ○ | ○ |
| Example 4 | D | ○ | ○ | ○ | ○ | ○ | Δ | ○ | ○ | ○ | ○ | Δ | ○ | ○ | ○ | ○ |
| Example 5 | E | ○ | ○ | ○ | ○ | ○ | Δ | ○ | ○ | ○ | ○ | Δ | ○ | ○ | ○ | ○ |
| Example 6 | F | ○ | ○ | ○ | ○ | ○ | Δ | ○ | ○ | ○ | ○ | Δ | ○ | ○ | ○ | ○ |
| Example 7 | G | ○ | ○ | ○ | ○ | ○ | Δ | ○ | ○ | ○ | ○ | Δ | ○ | ○ | ○ | ○ |
| Example 8 | H | ○ | ○ | ○ | ○ | ○ | Δ | ○ | ○ | ○ | ○ | Δ | ○ | ○ | ○ | ○ |
| Example 9 | I | ○ | ○ | ○ | ○ | ○ | Δ | ○ | ○ | ○ | ○ | Δ | ○ | ○ | ○ | ○ |
| Example 10 | J | ○ | ○ | ○ | ○ | ○ | Δ | ○ | ○ | ○ | ○ | Δ | ○ | ○ | ○ | ○ |
| Example 11 | K | ○ | ○ | ○ | ○ | ○ | Δ | ○ | ○ | ○ | ○ | Δ | ○ | ○ | ○ | ○ |
| Example 12 | Q | ○ | ○ | ○ | ○ | ○ | Δ | ○ | ○ | ○ | ○ | Δ | ○ | ○ | ○ | ○ |
| Example 13 | R | ○ | ○ | ○ | ○ | ○ | Δ | ○ | ○ | ○ | ○ | Δ | ○ | ○ | ○ | ○ |

**[Table 4]**

| | Releasing primer composition | Resin base material: PET, sealant layer: CPP (laminate structure 4) | | | | | Resin base material: NY, sealant layer: CPP (laminate structure 5) | | | | | Resin base material: vapor deposition polyester film, vapor deposition nylon film NY, sealant layer: CPP (laminate structure 6) | | | | |
|---|---|---|---|---|---|---|---|---|---|---|---|---|---|---|---|---|
| | | Deinking | Adhesion property | Anti-blocking property | Peel strength | | Deinking | Adhesion property | Anti-blocking property | Peel strength | | Deinking | Adhesion property | Anti-blocking property | Peel strength | |
| | | Aqueous alkali solution | Immediately after printing | | Pre-retort | Post-retort | Aqueous alkali solution | Immediately after printing | | Pre-retort | Post-retort | Aqueous alkali solution | Immediately after printing | | Pre-retort | Post-retort |
| Example 14 | A | ○ | ○ | ○ | ○ | ○ | ○ | ○ | ○ | ○ | ○ | ○ | ○ | ○ | ○ | ○ |
| Example 15 | B | ○ | ○ | ○ | ○ | ○ | ○ | ○ | ○ | ○ | ○ | ○ | ○ | ○ | ○ | ○ |
| Example 16 | C | ○ | ○ | ○ | ○ | ○ | ○ | ○ | ○ | ○ | ○ | ○ | ○ | ○ | ○ | ○ |
| Example 17 | D | ○ | ○ | ○ | ○ | ○ | ○ | ○ | ○ | ○ | ○ | ○ | ○ | ○ | ○ | ○ |
| Example 18 | E | ○ | ○ | ○ | ○ | ○ | ○ | ○ | ○ | ○ | ○ | ○ | ○ | ○ | ○ | ○ |
| Example 19 | F | ○ | ○ | ○ | ○ | ○ | ○ | ○ | ○ | ○ | ○ | ○ | ○ | ○ | ○ | ○ |
| Example 20 | G | ○ | ○ | ○ | ○ | ○ | ○ | ○ | ○ | ○ | ○ | ○ | ○ | ○ | ○ | ○ |
| Example 21 | H | ○ | ○ | ○ | ○ | ○ | ○ | ○ | ○ | ○ | ○ | ○ | ○ | ○ | ○ | ○ |
| Example 22 | I | ○ | ○ | ○ | ○ | ○ | ○ | ○ | ○ | ○ | ○ | ○ | ○ | ○ | ○ | ○ |
| Example 23 | J | ○ | ○ | ○ | ○ | ○ | ○ | ○ | ○ | ○ | ○ | ○ | ○ | ○ | ○ | ○ |
| Example 24 | K | ○ | ○ | ○ | ○ | ○ | ○ | ○ | ○ | ○ | ○ | ○ | ○ | ○ | ○ | ○ |
| Example 25 | Q | ○ | ○ | ○ | ○ | ○ | ○ | ○ | ○ | ○ | ○ | ○ | ○ | ○ | ○ | ○ |
| Example 26 | R | ○ | ○ | ○ | ○ | ○ | ○ | ○ | ○ | ○ | ○ | ○ | ○ | ○ | ○ | ○ |

**[Table 5]**

| | Releasing primer composition | Resin base material: PET, sealant layer: AL/CPP (laminate structure 1 in Comparative Examples 1 to 6, laminate structure 7 in Comparative Example 6) | | | | | Resin base material: NY, sealant layer: CPP (laminate structure 2 in Comparative Examples 1 to 6, laminate structure 8 in Comparative Example 6) | | | | | Resin base material: vapor deposition polyester film, vapor deposition nylon film NY, sealant layer: CPP (laminate structure 3 in Comparative Examples 1 to 6, laminate structure 9 in Comparative Example 6) | | | | |
|---|---|---|---|---|---|---|---|---|---|---|---|---|---|---|---|---|
| | | Deinking | Adhesion property | Anti-blocking property | Peel strength | | Deinking | Adhesion property | Anti-blocking property | Peel strength | | Deinking | Adhesion property | Anti-blocking property | Peel strength | |
| | | Aqueous alkali solution | Immediately after printing | | Pre-retort | Post-retort | Aqueous alkali solution | Immediately after printing | | Pre-retort | Post-retort | Aqueous alkali solution | Immediately after printing | | Pre-retort | Post-retort |
| Comp. Example 1 | L | ○ | ○ | ○ | ○ | × | Δ | ○ | ○ | ○ | × | Δ | ○ | ○ | ○ | × |
| Comp. Example 2 | M | × | ○ | ○ | ○ | ○ | × | ○ | ○ | ○ | ○ | × | ○ | ○ | ○ | ○ |
| Comp. Example 3 | N | ○ | ○ | ○ | ○ | × | Δ | ○ | ○ | ○ | × | Δ | ○ | ○ | ○ | × |
| Comp. Example 4 | ○ | ○ | × | ○ | ○ | × | Δ | × | ○ | ○ | × | Δ | × | ○ | ○ | × |
| Comp. Example 5 | P | × | × | × | ○ | ○ | × | × | × | ○ | ○ | × | × | × | ○ | ○ |
| Comp.e Example 6 | Not used. | × | × | × | × | × | × | × | × | × | × | × | × | × | × | × |

**[Table 6]**

| | Releasing primer composition | Resin base material: PET, sealant layer: AL/CPP (laminate structure 4 in Comparative Examples 7 to 11, laminate structure 7 in Comparative Example 6) | | | | | Resin base material: NY, sealant layer: CPP (laminate structure 5 in Comparative Examples 7 to 11, laminate structure 8 in Comparative Example 6) | | | | | Resin base material: vapor deposition polyester film, vapor deposition nylon film NY, sealant layer: CPP (laminate structure 6 in Comparative Examples 7 to 11, laminate structure 9 in Comparative Example 6) | | | | |
|---|---|---|---|---|---|---|---|---|---|---|---|---|---|---|---|---|
| | | Deinking | Adhesion property | Anti-blocking property | Peel strength | | Deinking | Adhesion property | Anti-blocking property | Peel strength | | Deinking | Adhesion property | Anti-blocking property | Peel strength | |
| | | Aqueous alkali solution | Immediately after printing | | Pre-retort | Post-retort | Aqueous alkali solution | Immediately after printing | | Pre-retort | Post-retort | Aqueous alkali solution | Immediately after printing | | Pre-retort | Post-retort |
| Comp. Example 7 | L | ○ | ○ | ○ | ○ | × | ○ | ○ | ○ | ○ | × | ○ | ○ | ○ | ○ | × |
| Comp. Example 8 | M | × | ○ | ○ | ○ | ○ | × | ○ | ○ | ○ | ○ | × | ○ | ○ | ○ | ○ |
| Comp. Example 9 | N | ○ | ○ | ○ | ○ | × | ○ | ○ | ○ | ○ | × | ○ | ○ | ○ | ○ | × |
| Comp. Example 10 | ○ | ○ | × | ○ | ○ | × | ○ | × | ○ | ○ | × | ○ | × | ○ | ○ | × |
| Comp. Example 11 | P | × | × | × | ○ | ○ | × | × | × | ○ | ○ | × | × | × | ○ | ○ |
| Comp. Example 6 | Not used. | × | × | × | × | × | × | × | × | × | × | × | × | × | × | × |

According to the Examples in Table 3 representing examples of dry laminates conforming to the present invention, the resin base material and printed layer could be separated regardless of whether the resin base material was PET (polyethylene terephthalate), NY (nylon), vapor deposition PET (polyethylene terephthalate), or vapor deposition NY (nylon). Use of AL/CPP (aluminum vapor deposited cast propylene film) as the sealant layer allowed the sealant layer and printed layer to be separated because the AL (aluminum layer) dissolved in the deinking process.

Also, according to the Examples in Table 4 representing examples of dry laminates conforming to the present invention, the resin base material and printed layer could be separated, and the sealant layer and printed layer could also be separated, regardless of whether the resin base material was PET (polyethylene terephthalate), NY (nylon), vapor deposition PET (polyethylene terephthalate), or vapor deposition NY (nylon).

By contrast, according to Comparative Example 1 and Comparative Example 7 where the ratio of the number of glycidyl groups in the silane coupling agent relative to the number of amino groups in the polyethyleneimine compound was low, and according to Comparative Example 3 and Comparative Example 9 where no silane coupling agent was contained, the post-retort peel strength was poor; conversely, according to Comparative Example 2 and Comparative Example 8 where this ratio was high, insufficient deinking resulted. Also, according to Comparative Example 4 and Comparative Example 10 where PVA was used in place of the polyethyleneimine compound, adhesion property and post-retort peel strength were poor, while according to Comparative Example 5 and Comparative Example 11 where polyurethane was used, deinking was insufficient and adhesion property and anti-blocking property were poor. In addition, according to Comparative Example 6 where no primer was used, all evaluations became worse.

**[Table 7]**

| | Releasing primer composition | Resin base material: PET, sealant layer: molten PE (laminate structure 10) | | | | | Resin base material: NY, sealant layer: molten PE (laminate structure 11) | | | | | Resin base material: vapor deposition polyester film, vapor deposition nylon film NY, sealant layer: molten PE (laminate structure 12) | | | | |
|---|---|---|---|---|---|---|---|---|---|---|---|---|---|---|---|---|
| | | Deinking | Adhesion property | Anti-blocking property | Peel strength | | Deinking | Adhesion property | Anti-blocking property | Peel strength | | Deinking | Adhesion property | Anti-blocking property | Peel strength | |
| | | Aqueous alkali solution | Immediately after printing | | Pre-retort | Post-retort | Aqueous alkali solution | Immediately after printing | | Pre-retort | Post-retort | Aqueous alkali solution | Immediately after printing | | Pre-retort | Post-retort |
| Example 27 | A | Δ | ○ | ○ | ○ | ○ | Δ | ○ | ○ | ○ | ○ | Δ | ○ | ○ | ○ | ○ |
| Example 28 | B | Δ | ○ | ○ | ○ | ○ | Δ | ○ | ○ | ○ | ○ | Δ | ○ | ○ | ○ | ○ |
| Example 29 | C | Δ | ○ | ○ | ○ | ○ | Δ | ○ | ○ | ○ | ○ | Δ | ○ | ○ | ○ | ○ |
| Example 30 | D | Δ | ○ | ○ | ○ | ○ | Δ | ○ | ○ | ○ | ○ | Δ | ○ | ○ | ○ | ○ |
| Example 31 | E | Δ | ○ | ○ | ○ | ○ | Δ | ○ | ○ | ○ | ○ | Δ | ○ | ○ | ○ | ○ |
| Example 32 | F | Δ | ○ | ○ | ○ | ○ | Δ | ○ | ○ | ○ | ○ | Δ | ○ | ○ | ○ | ○ |
| Example 33 | G | Δ | ○ | ○ | ○ | ○ | Δ | ○ | ○ | ○ | ○ | Δ | ○ | ○ | ○ | ○ |
| Example 34 | H | Δ | ○ | ○ | ○ | ○ | Δ | ○ | ○ | ○ | ○ | Δ | ○ | ○ | ○ | ○ |
| Example 35 | I | Δ | ○ | ○ | ○ | ○ | Δ | ○ | ○ | ○ | ○ | Δ | ○ | ○ | ○ | ○ |
| Example 36 | J | Δ | ○ | ○ | ○ | ○ | Δ | ○ | ○ | ○ | ○ | Δ | ○ | ○ | ○ | ○ |
| Example 37 | K | Δ | ○ | ○ | ○ | ○ | Δ | ○ | ○ | ○ | ○ | Δ | ○ | ○ | ○ | ○ |
| Example 38 | Q | Δ | ○ | ○ | ○ | ○ | Δ | ○ | ○ | ○ | ○ | Δ | ○ | ○ | ○ | ○ |
| Example 39 | R | Δ | ○ | ○ | ○ | ○ | Δ | ○ | ○ | ○ | ○ | Δ | ○ | ○ | ○ | ○ |

**[Table 8]**

| | Releasing primer composition | Resin base material: PET, sealant layer: molten PE (laminate structure 13) | | | | | Resin base material: NY, sealant layer: molten PE (laminate structure 14) | | | | | Resin base material: vapor deposition polyester film, vapor deposition nylon film NY, sealant layer: molten PE (laminate structure 15) | | | | |
|---|---|---|---|---|---|---|---|---|---|---|---|---|---|---|---|---|
| | | Deinking | Adhesion property | Anti-blocking property | Peel strength | | Deinking | Adhesion property | Anti-blocking property | Peel strength | | Deinking | Adhesion property | Anti-blocking property | Peel strength | |
| | | Aqueous alkali solution | Immediately after printing | | Pre-retort | Post-retort | Aqueous alkali solution | Immediately after printing | | Pre-retort | Post-retort | Aqueous alkali solution | Immediately after printing | | Pre-retort | Post-retort |
| Example 27 | A | ○ | ○ | ○ | ○ | ○ | ○ | ○ | ○ | ○ | ○ | ○ | ○ | ○ | ○ | ○ |
| Example 28 | B | ○ | ○ | ○ | ○ | ○ | ○ | ○ | ○ | ○ | ○ | ○ | ○ | ○ | ○ | ○ |
| Example 29 | C | ○ | ○ | ○ | ○ | ○ | ○ | ○ | ○ | ○ | ○ | ○ | ○ | ○ | ○ | ○ |
| Example 30 | D | ○ | ○ | ○ | ○ | ○ | ○ | ○ | ○ | ○ | ○ | ○ | ○ | ○ | ○ | ○ |
| Example 31 | E | ○ | ○ | ○ | ○ | ○ | ○ | ○ | ○ | ○ | ○ | ○ | ○ | ○ | ○ | ○ |
| Example 32 | F | ○ | ○ | ○ | ○ | ○ | ○ | ○ | ○ | ○ | ○ | ○ | ○ | ○ | ○ | ○ |
| Example 33 | G | ○ | ○ | ○ | ○ | ○ | ○ | ○ | ○ | ○ | ○ | ○ | ○ | ○ | ○ | ○ |
| Example 34 | H | ○ | ○ | ○ | ○ | ○ | ○ | ○ | ○ | ○ | ○ | ○ | ○ | ○ | ○ | ○ |
| Example 35 | I | ○ | ○ | ○ | ○ | ○ | ○ | ○ | ○ | ○ | ○ | ○ | ○ | ○ | ○ | ○ |
| Example 36 | J | ○ | ○ | ○ | ○ | ○ | ○ | ○ | ○ | ○ | ○ | ○ | ○ | ○ | ○ | ○ |
| Example 37 | K | ○ | ○ | ○ | ○ | ○ | ○ | ○ | ○ | ○ | ○ | ○ | ○ | ○ | ○ | ○ |
| Example 38 | Q | ○ | ○ | ○ | ○ | ○ | ○ | ○ | ○ | ○ | ○ | ○ | ○ | ○ | ○ | ○ |
| Example 39 | R | ○ | ○ | ○ | ○ | ○ | ○ | ○ | ○ | ○ | ○ | ○ | ○ | ○ | ○ | ○ |

**[Table 9]**

| | Releasing primer composition | Resin base material: PET, sealant layer: molten PE (laminate structure 10 in Comparative Examples 12 to 16, laminate structure 16 in Comparative Example 17) | | | | | Resin base material: NY, sealant layer: molten PE (laminate structure 11 in Comparative Examples 12 to 16, laminate structure 17 in Comparative Example 17) | | | | | Resin base material: vapor deposition polyester film, vapor deposition nylon film NY, sealant layer: molten PE (laminate structure 12 in Comparative Examples 12 to 16, laminate structure 18 in Comparative Example 17) | | | | |
|---|---|---|---|---|---|---|---|---|---|---|---|---|---|---|---|---|
| | | Deinking | Adhesion property | Anti-blocking property | Peel strength | | Deinking | Adhesion property | Anti-blocking property | Peel strength | | Deinking | Adhesion property | Anti-blocking property | Peel strength | |
| | | Aqueous alkali solution | Immediately after printing | | Pre-retort | Post-retort | Aqueous alkali solution | Immediately after printing | | Pre-retort | Post-retort | Aqueous alkali solution | Immediately after printing | | Pre-retort | Post-retort |
| Comp. Example 12 | L | ○ | ○ | ○ | ○ | × | Δ | ○ | ○ | ○ | × | Δ | ○ | ○ | ○ | × |
| Comp. Example 13 | M | × | ○ | ○ | ○ | ○ | × | ○ | ○ | ○ | ○ | × | ○ | ○ | ○ | ○ |
| Comp. Example 14 | N | ○ | ○ | ○ | ○ | × | Δ | ○ | ○ | ○ | × | Δ | ○ | ○ | ○ | × |
| Comp. Example 15 | ○ | ○ | × | ○ | ○ | × | Δ | × | ○ | ○ | × | Δ | × | ○ | ○ | × |
| Comp. Example 16 | P | × | × | × | ○ | ○ | × | × | × | ○ | ○ | × | × | × | ○ | ○ |
| Comp. Example 17 | Not used. | × | × | × | × | × | × | × | × | × | × | × | × | × | × | × |

**[Table 10]**

| | Releasing primer composition | Resin base material: PET, sealant layer: molten PE (laminate structure 13 in Comparative Examples 18 to 22, laminate structure 16 in Comparative Example 17) | | | | | Resin base material: NY, sealant layer: molten PE (laminate structure 14 in Comparative Examples 18 to 22, laminate structure 17 in Comparative Example 17) | | | | | Resin base material: vapor deposition polyester film, vapor deposition nylon film NY, sealant layer: molten PE (laminate structure 15 in Comparative Examples 18 to 22, laminate structure 18 in Comparative Example 17) | | | | |
|---|---|---|---|---|---|---|---|---|---|---|---|---|---|---|---|---|
| | | Deinking | Adhesion property | Anti-blocking property | Peel strength | | Deinking | Adhesion property | Anti-blocking property | Peel strength | | Deinking | Adhesion property | Anti-blocking property | Peel strength | |
| | | Aqueous alkali solution | Immediately after printing | | Pre-retort | Post-retort | Aqueous alkali solution | Immediately after printing | | Pre-retort | Post-retort | Aqueous alkali solution | Immediately after printing | | Pre-retort | Post-retort |
| Comp. Example 18 | L | ○ | ○ | ○ | ○ | × | ○ | ○ | ○ | ○ | × | ○ | ○ | ○ | ○ | × |
| Comp. Example 19 | M | × | ○ | ○ | ○ | ○ | × | ○ | ○ | ○ | ○ | × | ○ | ○ | ○ | ○ |
| Comp. Example 20 | N | ○ | ○ | ○ | ○ | × | ○ | ○ | ○ | ○ | × | ○ | ○ | ○ | ○ | × |
| Comp. Example 21 | O | ○ | × | ○ | ○ | × | ○ | × | ○ | ○ | × | ○ | × | ○ | ○ | × |
| Comp. Example 22 | P | × | × | × | ○ | ○ | × | × | × | ○ | ○ | × | × | × | ○ | ○ |
| Comp. Example 17 | Not used. | × | × | × | × | × | × | × | × | × | × | × | × | × | × | × |

According to the Examples in Table 7 representing examples of extruded laminates conforming to the present invention, the resin base material and printed layer could be separated in the deinking process regardless of whether the resin base material was PET (polyethylene terephthalate), NY (nylon), vapor deposition PET (polyethylene terephthalate), or vapor deposition NY (nylon). However, the sealant layer and printed layer could not be separated.

Also, according to the Examples in Table 8 representing examples of dry laminates conforming to the present invention, the resin base material and printed layer could be separated, and the sealant layer and printed layer could also be separated, regardless of whether the resin base material was PET (polyethylene terephthalate), NY (nylon), vapor deposition PET (polyethylene terephthalate), or vapor deposition NY (nylon).

By contrast, according to Comparative Example 12 and Comparative Example 18 where the ratio of the number of glycidyl groups in the silane coupling agent relative to the number of amino groups in the polyethyleneimine compound was low, and according to Comparative Example 14 and Comparative Example 20 where no silane coupling agent was contained, the post-retort peel strength was poor; conversely, according to Comparative Example 13 and Comparative Example 19 where this ratio was high, insufficient deinking resulted. Also, according to Comparative Example 15 and Comparative Example 21 where PVA was used in place of the polyethyleneimine compound, adhesion property and post-retort peel strength were poor, while according to Comparative Example 16 and Comparative Example 22 where polyurethane was used, deinking was insufficient, and adhesion property and anti-blocking property were poor. In addition, according to Comparative Example 17 where no primer was used, all evaluations became worse.

## Claims

1. A releasing primer composition containing at least one type selected from (1) to (3) below, for forming a releasing primer layer which is used in a laminate by lamination layered in an order of a resin base material, the releasing primer layer, a printed layer, and a sealant layer.
(1) A mixture containing a silane coupling agent containing glycidyl groups and a polyethyleneimine compound.
(2) A mixture containing a silane coupling agent containing isocyanate groups and a polyethyleneimine compound.
(3) A siloxane-modified polyethyleneimine compound.

2. The releasing primer composition according to claim 1, wherein the polyethyleneimine compound mentioned in (1) or (2) above has an amine value of 15.0 to 25.0 mmol/g and is also contained in a manner satisfying a condition described below, and the siloxane-modified polyethyleneimine compound mentioned in (3) above has an amine value of 5.0 to 15.0 mmol/g.
Condition
A ratio of a total number of glycidyl groups in a silane coupling agent and isocyanate groups in the silane coupling agent relative to a number of amino groups in polyethyleneimine compounds ((number of glycidyl groups in the silane coupling agent + number of isocyanate groups in the silane coupling agent) / (total sum of a number of primary amino groups and number of secondary amino groups in the polyethyleneimine compounds)) is 0.20 to 2.50.

3. The releasing primer composition according to claim 1 or 2, wherein a number-averaged molecular weight of the polyethyleneimine compound, and that of the siloxane-modified polyethyleneimine compound, are each independently 1,000 to 200,000.

4. The releasing primer composition according to claim 1 or 2, wherein a mass-averaged molecular weight of the polyethyleneimine compound, and that of the siloxane-modified polyethyleneimine compound, are each independently 4,000 to 800,000.

5. The releasing primer composition according to claim 1 or 2, wherein the sealant layer is a layer formed by a cast propylene film or a cast propylene film having a metal vapor deposition layer, or formed by a molten polyethylene.

6. A laminate comprising, on the resin base material, a releasing primer layer formed by the releasing primer composition according to claim 1 or 2, as well as a printed layer formed on the releasing primer layer, and a sealant layer dry-laminated on the printed layer via an adhesive layer.

7. A laminate comprising, on the resin base material, a releasing primer layer formed by the releasing primer composition according to claim 1 or 2, as well as a printed layer formed on the releasing primer layer, and a sealant layer extrusion-laminated on the printed layer via an anchor coating agent layer.
